# EUROPEAN PATENT APPLICATION

(11) **EP 4 694 511 A1**
(43) Date of publication of application: **11.02.2026**
(21) Application number: 23932115.1
(22) Date of filing: 07.04.2023
(51) Int. Cl.: H04W 72/54, H04W 72/0453

(54) **TERMINAL AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); SHICHIJO, Taichi, Tokyo 100-6150 (JP); NAGATA, Satoshi, Tokyo 100-6150 (JP)
(74) Representative: Hoffmann Eitle
(86) International application number: PCT/JP2023/014465
(87) International publication number: WO 2024/209705

(57) **Abstract**

A terminal includes a reception unit configured to perform Listen Before Talk (LBT) immediately before a first candidate symbol or a second candidate symbol for starting transmission in an unlicensed band; a control unit configured to configure a parameter or a Sidelink Control Information (SCI) field used for determining a Transport Block Size (TBS), the parameter or the SCI field being different from a parameter or an SCI field that is used in a case where a plurality of candidate symbols for starting transmission are not available; and a transmission unit configured to, in a case where the LBT is successful, determine the TBS based on the parameter or the SCI field and start transmission to another terminal from a candidate symbol immediately after the LBT.

## Description

### TECHNICAL FIELD

The present invention relates to a terminal and communication method in a wireless communication system.

### BACKGROUND ART

In LTE (Long Term Evolution) and its successor systems (e.g., LTE-A (LTE Advanced) and NR (New Radio), also referred to as 5G), Device-to-Device (D2D) communication techniques, in which terminals communicate directly with each other without passing through a base station, have been studied (e.g., see Non-Patent Literature 1).

D2D communication reduces traffic between terminals and base stations, and enables communication between terminals even when a base station becomes unavailable, such as in the event of a disaster. In the 3GPP (3rd Generation Partnership Project) (registered trademark), D2D is referred to as "sidelink"; however, in this specification, the more general term "D2D" is used. It should be noted that the term "sidelink" may also be used, as appropriate, in the descriptions of the embodiments provided later.

D2D communication is broadly classified into D2D discovery, which is used to discover other terminals capable of communication, and D2D direct communication, which is used for direct communication between terminals (also referred to as terminal-to-terminal direct communication, among other terms). Hereinafter, unless otherwise specified, the term "D2D" is used to collectively refer to D2D communication and D2D discovery. In addition, signals transmitted and received in D2D are referred to as D2D signals. Various use cases for services related to Vehicle to Everything (V2X) in NR are being studied (e.g., see Non-Patent Literature 2).

In NR Release 17 (e.g., see Non-Patent Literature 3), the use of frequency bands higher than those used in previous releases is being considered. For example, in the frequency range from 52.6 GHz to 71 GHz, applicable numerologies including subcarrier spacing and channel bandwidth, physical layer design, and potential impairments assumed in actual wireless communication are under study.

### CITATION LIST

### Non-Patent Literature

Non-Patent Literature 1: 3GPP TS 38.211 V17.4.0 (2022-12)
Non-Patent Literature 2: 3GPP TR 22.886 V16.2.0 (2018-12)
Non-Patent Literature 3: 3GPP TS 38.306 V17.3.0 (2022-12)
Non-Patent Literature 4: 3GPP TS 37.213 V17.4.0 (2022-12)
Non-Patent Literature 5: 3GPP TS 38.214 V17.4.0 (2022-12)

### SUMMARY OF INVENTION

### TECHNICAL PROBLEM

An unlicensed band is defined in a newly operated frequency band that utilizes higher frequencies than those conventionally used. In the unlicensed band, various regulations are stipulated, and, for example, Listen Before Talk (LBT) is performed upon channel access. To improve the efficiency of resource utilization, in transmissions for device-to-device communication, two candidate symbols for starting transmission within one slot are supported. However, when there are two candidate symbols for starting transmission, it is necessary to optimize the parameters used for determining the Transport Block Size (TBS).

The present invention has been made in view of the above-described circumstances, and an object of the present invention is to determine suitable parameters to be applied to transmission in direct communication between terminals in an unlicensed band.

### SOLUTION TO PROBLEM

According to the disclosed technique, a terminal is provided. The terminal includes:
a reception unit configured to perform Listen Before Talk (LBT) immediately before a first candidate symbol or a second candidate symbol for starting transmission in an unlicensed band;
a control unit configured to configure a parameter or a Sidelink Control Information (SCI) field used for determining a Transport Block Size (TBS), the parameter or the SCI field being different from a parameter or an SCI field that is used in a case where a plurality of candidate symbols for starting transmission are not available; and
a transmission unit configured to, in a case where the LBT is successful, determine the TBS based on the parameter or the SCI field and start transmission to another terminal from a candidate symbol immediately after the LBT.

### ADVANTAGEOUS EFFECTS OF INVENTION

According to the disclosed art, it is possible to determine suitable parameters to be applied to transmission in direct communication between terminals in an unlicensed band.

### BRIEF DESCRIPTION OF DRAWINGS

[FIG. 1] FIG. 1 is a diagram illustrating V2X.
[FIG. 2] FIG. 2 is a sequence diagram illustrating an operation example (1) of V2X.
[FIG. 3] FIG. 3 is a sequence diagram illustrating an operation example (2) of V2X.
[FIG. 4] FIG. 4 is a sequence diagram illustrating an operation example (3) of V2X.
[FIG. 5] FIG. 5 is a sequence diagram illustrating an operation example (4) of V2X.
[FIG. 6] FIG. 6 is a diagram illustrating an example of sensing operation.
[FIG. 7] FIG. 7 is a flowchart illustrating an example of preemption operation.
[FIG. 8] FIG. 8 is a diagram illustrating an example of preemption operation.
[FIG. 9] FIG. 9 is a diagram illustrating an example of partial sensing operation.
[FIG. 10] FIG. 10 is a diagram illustrating an example of periodic partial sensing.
[FIG. 11] FIG. 11 is a diagram illustrating an example of continuous partial sensing.
[FIG. 12] FIG. 12 is a diagram illustrating an example of a frequency range according to an embodiment of the present invention.
[FIG. 13] FIG. 13 is a diagram illustrating an LBT example (1).
[FIG. 14] FIG. 14 is a diagram illustrating an LBT example (2).
[FIG. 15] FIG. 15 is a diagram illustrating an LBT example (3).
[FIG. 16] FIG. 16 is a diagram illustrating an example (1) of broadband operation.
[FIG. 17] FIG. 17 is a diagram illustrating an example (2) of broadband operation.
[FIG. 18] FIG. 18 is a diagram illustrating an example (3) of broadband operation.
[FIG. 19] FIG. 19 is a diagram illustrating an example (4) of broadband operation.
[FIG. 20] FIG. 20 is a diagram illustrating an example (1) of transmission in an embodiment of the present invention.
[FIG. 21] FIG. 21 is a diagram illustrating an example (2) of transmission in an embodiment of the present invention.
[FIG. 22] FIG. 22 is a diagram illustrating an example (3) of transmission in an embodiment of the present invention.
[FIG. 23] FIG. 23 is a diagram illustrating an example (4) of transmission in an embodiment of the present invention.
[FIG. 24] FIG. 24 is a diagram illustrating an example (5) of transmission in an embodiment of the present invention.
[FIG. 25] FIG. 25 is a diagram illustrating an example of the functional configuration of a base station 10 in an embodiment of the present invention.
[FIG. 26] FIG. 26 is a diagram illustrating an example of the functional configuration of a terminal 20 according to an embodiment of the present invention.
[FIG. 27] FIG. 27 is a diagram illustrating an example of the hardware configuration of a base station 10 or a terminal 20 according to an embodiment of the present invention.
[FIG. 28] FIG. 28 is a diagram illustrating an example of the configuration of a vehicle 2001 according to an embodiment of the present invention.

### DESCRIPTION OF EMBODIMENTS

Embodiments of the present invention will be described below with reference to the accompanying drawings. The embodiments described below are only examples, and the embodiments to which the present invention is applied are not limited to the following embodiments.

In the operation of the wireless communication system according to the embodiment of the present invention, an existing technique is used as appropriate. However, the existing technique is, for example, existing LTE, but is not limited to existing LTE. The term "LTE" as used herein has a broad meaning including LTE-Advanced, LTE-Advanced or later systems (e.g., NR), or wireless Local Area Network (LAN), unless otherwise specified.

In the embodiment of the present invention, the duplex system may be the Time Division Duplex (TDD) system, the Frequency Division Duplex (FDD) system, or any other system (e.g., Flexible Duplex, etc.).

In the embodiment of the present invention, the term "configure" of the radio parameters may mean that a predetermined value is pre-configured, or that the radio parameters indicated from the base station 10 or the terminal 20 are configured.

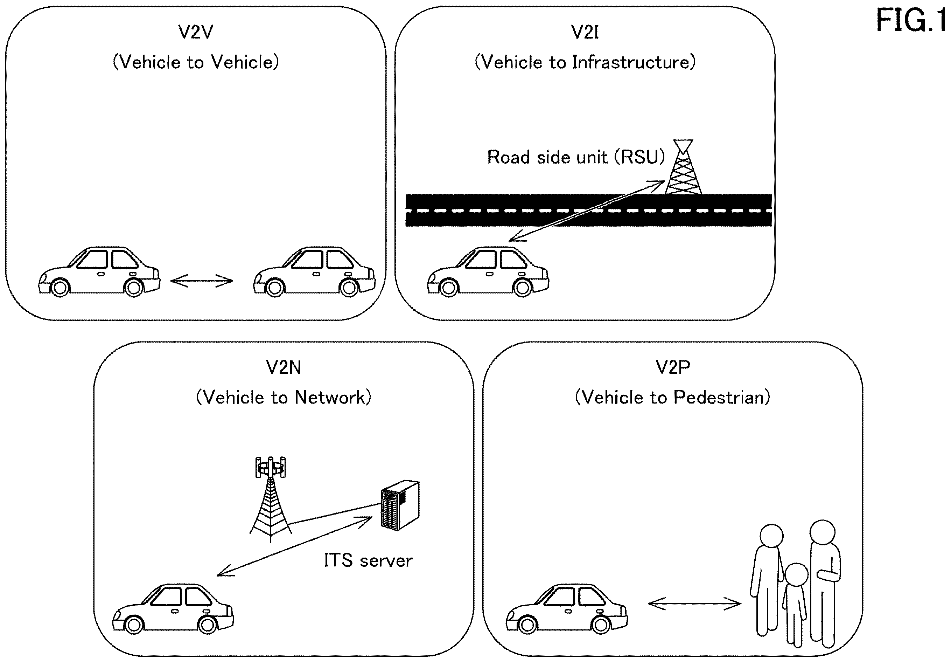

FIG. 1 is a diagram illustrating V2X. In the 3GPP, the implementation of Vehicle to Everything (V2X) or enhanced V2X (eV2X) by extending the D2D function is being studied, and specifications are being advanced. As illustrated in FIG. 1, V2X is a part of ITS (Intelligent Transport Systems) and is a generic name for V2V (Vehicle to Vehicle), which means a communication mode between vehicles, V2I (Vehicle to Infrastructure), which means a communication mode between vehicles and a Road-Side Unit (RSU), Vehicle to Network (V2N), which means a communication mode between vehicles and ITS servers, and Vehicle to Pedestrian (V2P), which means a communication mode between vehicles and mobile terminals owned by pedestrians.

In 3GPP, V2X utilizing cellular communication and terminal-to-terminal communication based on LTE or NR is under study. V2X using cellular communication is also referred to as cellular V2X. In NR-based V2X, studies are being conducted to achieve large capacity, low latency, high reliability, and Quality of Service (QoS) control.

With respect to V2X based on LTE or NR, it is anticipated that studies not limited to 3GPP specifications will be conducted in the future. For example, considerations may include ensuring interoperability, reducing costs through upper layer implementations, methods for utilizing or switching between multiple Radio Access Technologies (RATs), compliance with regulations in different countries, and methods for data acquisition, distribution, database management, and utilization on LTE or NR V2X platforms.

In an embodiment of the present invention, it is primarily assumed that the communication device is mounted on a vehicle. However, the embodiment of the present invention is not limited to such a configuration. For example, the communication device may be a terminal carried by a person, a device mounted on a drone or an aircraft, or a device such as a base station, a Road-Side Unit (RSU), a relay node, or a terminal having scheduling capability.

Sidelink (SL) may be distinguished based on one or a combination of Uplink (UL) or Downlink (DL) and 1) to 4) below. SL may have other names.
1) Resource allocation in the time domain
2) Resource allocation in the frequency domain
3) Reference synchronization signal (including Sidelink Synchronization Signal (SLSS))
4) Reference signal used for path loss measurement for transmission power control

For Orthogonal Frequency Division Multiplexing (OFDM) of SL or UL, Cyclic-Prefix OFDM (CP-OFDM), Discrete Fourier Transform-Spread-OFDM (DFT-S-OFDM), OFDM without transform precoding, or OFDM with transform precoding may be applied.

In SL of LTE, Mode 3 and Mode 4 are specified for resource allocation of SL to the terminal 20. In Mode 3, transmission resources are dynamically allocated by Downlink Control Information (DCI) transmitted from the base station 10 to the terminal 20. In Mode 3, Semi-Persistent Scheduling (SPS) is also possible. In Mode 4, the terminal 20 autonomously selects transmission resources from the resource pool.

Note that the slot in the embodiment of the present invention may be read as a symbol, minislot, subframe, radio frame, or TTI (Transmission Time Interval). The cell in the embodiment of the present invention may be read as a cell group, carrier component, BWP, resource pool, resource, Radio Access Technology (RAT), system (including wireless LAN), or the like.

Note that in the embodiment of the present invention, the terminal 20 is not limited to a V2X terminal, but may be any type of terminal that performs D2D communication. For example, the terminal 20 may be a terminal owned by a user such as a smartphone, or an Internet of Things (IoT) device such as a smart meter.

In NR-SL, it is assumed that Hybrid Automatic Repeat Request (HARQ) is supported for unicast and groupcast of sidelink. In NR-V2X, Sidelink Feedback Control Information (SFCI) including HARQ response is defined. Furthermore, it is considered that SFCI is transmitted via Physical Sidelink Feedback Channel (PSFCH).

In the following description, PSFCH is used for transmitting HARQ-ACK in sidelink, but this is an example. For example, PSCCH may be used to transmit HARQ-ACK in sidelink, PSSCH may be used to transmit HARQ-ACK in sidelink, or other channels may be used to transmit HARQ-ACK in sidelink.

Hereinafter, for convenience, the general information reported by the terminal 20 in HARQ is called HARQ-ACK. This HARQ-ACK may be called HARQ-ACK information. More specifically, a codebook applied to the HARQ-ACK information reported from the terminal 20 to the base station 10 or the like is called an HARQ-ACK codebook. The HARQ-ACK codebook defines a bit string of HARQ-ACK information. In addition to ACK, NACK is also transmitted by "HARQ-ACK."

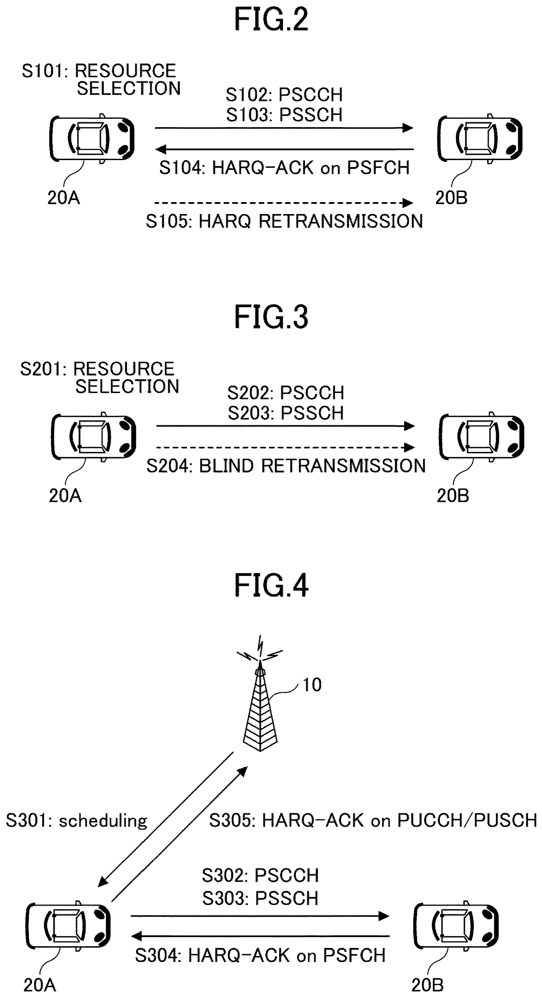

FIG. 2 is a sequence diagram illustrating an operation example (1) of V2X. As illustrated in FIG. 2, the wireless communication system according to the embodiment of the present invention may have terminals 20A and 20B. Although there are actually many user devices as terminals, FIG. 2 illustrates terminals 20A and 20B as examples.

Hereinafter, when terminals 20A and 20B are not specifically distinguished, they are simply referred to as "terminal 20" or "user device." FIG. 2 illustrates, as an example, a case where both terminals 20A and 20B are within the coverage of the cell, but the operation according to the embodiment of the present invention can also be applied when a terminal 20B is outside the coverage.

As described above, in the present embodiment, the terminal 20 is a device mounted on a vehicle such as an automobile, and has a cellular communication function as a UE in LTE or NR and a side link function. The terminal 20 may be a general mobile terminal (such as a smartphone). The terminal 20 may also be an RSU. The RSU may be a UE type RSU having a UE function or a gNB type RSU having a base station function.

Note that the terminal 20 does not have to be a device in one housing. For example, even if various sensors are distributed in the vehicle, the device including the various sensors may be the terminal 20.

The processing contents of the sidelink transmission data of the terminal 20 are basically the same as the processing contents of UL transmission in LTE or NR. For example, the terminal 20 scrambles and modulates the code words of the transmission data to generate complex-valued symbols, maps the complex-valued symbols (transmission signals) to 1 or 2 layers, and performs precoding. Then, it maps the precoded complex-valued symbols to resource elements, generates transmission signals (Example: complex-valued time-domain SC-FDMA signal), and transmits them from each antenna port.

The base station 10 has a function of cellular communication as a base station in LTE or NR and a function (Example: resource pool configuration, resource allocation, etc.) for enabling communication of the terminal 20 in the present embodiment. The base station 10 may be an RSU (gNB type RSU).

In the wireless communication system according to the embodiment of the present invention, the signal waveform used by the terminal 20 for SL or UL may be OFDMA, SC-FDMA, or other signal waveforms.

As a synchronization signal in SL, the terminal 20 transmits a Sidelink Synchronization Signal Block (S-SSB). The S-SSB may include a Sidelink Primary Synchronization Signal (S-PSS), Sidelink Secondary Synchronization Signal (S-SSS), and PSBCH (Physical Sidelink Broadcast Channel). Names such as S-SSB, S-PSS, and S-SSS are examples, and names other than S-SSB, S-PSS, and S-SSS may be used.

The terminal 20 transmits an S-SSB to another terminal 20 based on a signal received from the base station 10, a Global Navigation Satellite System (GNSS) signal, or a signal received from the other terminal 20. If the terminal 20 cannot transmit an S-SSB based on any of the signals from the base station 10, the GNSS, or the other terminal 20, the terminal 20 may transmit an autonomously determined S-SSB to the other terminal 20. The resource available for the S-SSB may be a periodic slot, and may be called an S-SSB occasion.

In step S101, a terminal 20A autonomously selects a resource to be used for the PSCCH and PSSCH from a resource selection window having a predetermined period. The resource selection window may be set from the base station 10 to the terminal 20. For the predetermined period of the resource selection window, the period may be specified by the implementation condition of the terminal, such as the processing time or the packet maximum allowable delay time, or the period may be specified in advance by the specification, and the predetermined period may be called an interval in the time domain.

In steps S102 and S103, the terminal 20A transmits Sidelink Control Information (SCI) by the PSCCH and/or PSSCH using the resource autonomously selected in step S101, and transmits SL data by the PSSCH. For example, the terminal 20A may transmit the PSCCH using the same time resource as at least a part of the time resource of the PSSCH and using the frequency resource adjacent to or not adjacent to the frequency resource of the PSSCH.

The terminal 20B receives SCI (PSCCH and/or PSSCH) and SL data (PSSCH) transmitted from the terminal 20A. The received SCI may include information related to the resources of PSFCH for which the terminal 20B sends a HARQ-ACK for the reception of the data. The terminal 20A may include information of autonomously selected resources in SCI and send it. The resources available for PSFCH may be periodic slots and symbols at the end of the slot (excluding the final symbol), and may be called PSFCH occasions.

In step S104, the terminal 20B sends a HARQ-ACK for the received data to the terminal 20A using the resources of PSFCH determined from the received SCI.

In step S105, the terminal 20A retransmits PSCCH and PSSCH to the terminal 20B if the HARQ-ACK received in step S104 indicates a request for retransmission, i.e., a NACK (negative response). The terminal 20A may retransmit PSCCH and PSSCH using autonomously selected resources.

If HARQ control with HARQ feedback is not executed, steps S104 and S105 may not be executed.

FIG. 3 is a sequence diagram illustrating an operation example (2) of V2X. Blind retransmission without HARQ control may be executed to improve the transmission success rate or reach distance.

In step S201, the terminal 20A autonomously selects resources to be used for PSCCH and PSSCH from a resource selection window having a predetermined period. The resource selection window may be set from a base station 10 to the terminal 20.

In step S202 and step S203, the terminal 20A uses the resources autonomously selected in step S201 to transmit SCI by PSCCH and/or PSSCH and to transmit SL data by PSSCH. For example, the terminal 20A may transmit the PSCCH using a frequency resource adjacent to the frequency resource of the PSSCH with the same time resource as at least a part of the time resource of the PSSCH.

In step S204, the terminal 20A retransmits the SCI data by the PSCCH and/or the SL data by the PSSCH to the terminal 20B using the resource autonomously selected in step S201. The retransmission in step S204 may be executed a plurality of times.

If the blind retransmission is not executed, step S204 may not be executed.

FIG. 4 is a sequence diagram illustrating the operation example (3) of V2X. The base station 10 may schedule the sidelink. That is, the base station 10 may determine the resources of the sidelink to be used by the terminal 20 and transmit information indicating the resources to the terminal 20. Furthermore, when HARQ control with HARQ feedback is applied, the base station 10 may transmit information indicating the resources of the PSFCH to the terminal 20.

In step S301, the base station 10 performs SL scheduling by sending Downlink Control Information (DCI) to the terminal 20A via PDCCH. Hereafter, the DCI for SL scheduling is referred to as the SL scheduling DCI for convenience.

In step S301, it is assumed that the base station 10 also sends DCI for DL scheduling (which may be referred to as DL allocation) to the terminal 20A via PDCCH. Hereafter, the DCI for DL scheduling is referred to as the DL scheduling DCI for convenience. The terminal 20A receiving the DL scheduling DCI receives DL data via PDSCH using the resources specified in the DL scheduling DCI.

In steps S302 and S303, the terminal 20A transmits Sidelink Control Information (SCI) via PSCCH and/or PSSCH using the resources specified in the SL scheduling DCI, and transmits SL data via PSSCH. In the SL scheduling DCI, only the resources of the PSSCH may be specified. In this case, for example, the terminal 20A may transmit the PSCCH using the frequency resources adjacent to the frequency resources of the PSSCH with the same time resources as at least a part of the time resources of the PSSCH.

The terminal 20B receives the SCI (PSCCH and/or PSSCH) and SL data (PSSCH) transmitted from the terminal 20A. The SCI received by the PSCCH and/or PSSCH includes information related to the resources of the PSFCH for which the terminal 20B transmits a HARQ-ACK for the reception of the data.

The information related to the resources is included in DL scheduling DCI or SL scheduling DCI transmitted from the base station 10 in step S301, and the terminal 20A acquires the information related to the resources from the DL scheduling DCI or SL scheduling DCI and includes it in the SCI. Alternatively, the DCI transmitted from the base station 10 may not include the information related to the resources, and the terminal 20A may autonomously include and transmit the information related to the resources in the SCI.

In step S304, the terminal 20B transmits a HARQ-ACK for the received data to the terminal 20A by using the resources of the PSFCH determined from the received SCI.

In step S305, the terminal 20A transmits a HARQ-ACK using the PUCCH (Physical uplink control channel) resource specified by the DL scheduling DCI (or SL scheduling DCI), for example, at the timing specified by the DL scheduling DCI (or SL scheduling DCI) (e.g., the timing per slot), and the base station 10 receives the HARQ-ACK. The codebook of the HARQ-ACK may include a HARQ-ACK generated based on the HARQ-ACK received from the terminal 20B or the PSFCH not received, and a HARQ-ACK for DL data. However, when no DL data is allocated, the HARQ-ACK for DL data is not included. In NR Rel. 16, the HARQ-ACK for DL data is not included in the codebook of the HARQ-ACK.

If HARQ control with HARQ feedback is not executed, steps S304 and/or S305 may not be executed.

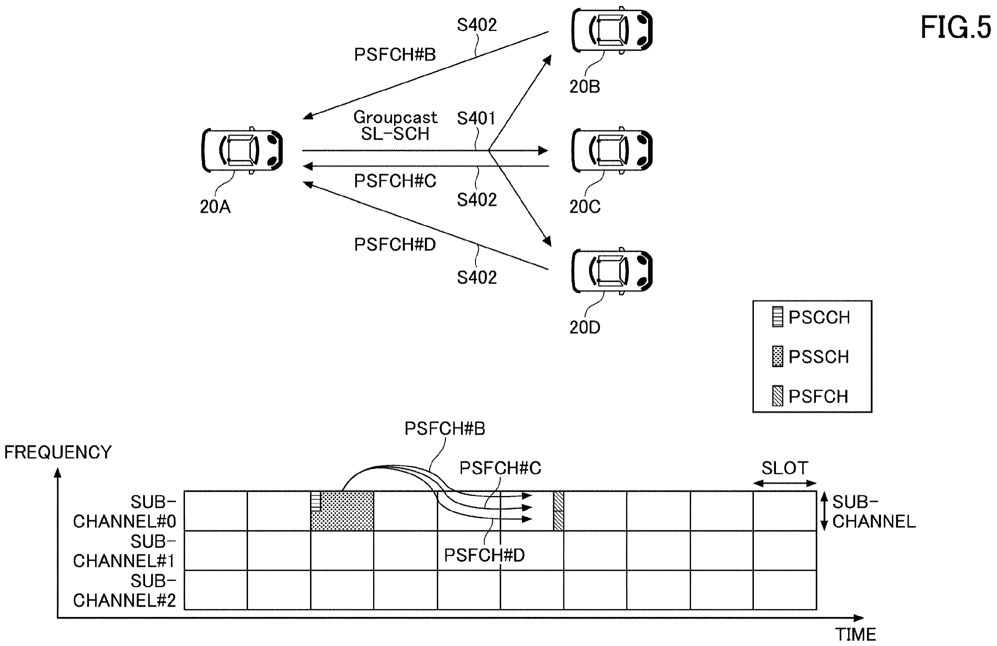

FIG. 5 is a sequence diagram illustrating Operation Example (4) of V2X. As described above, in NR sidelink, it is supported that HARQ feedback is transmitted via PSFCH. The format of the PSFCH may be, for example, a format similar to Physical Uplink Control Channel (PUCCH) format 0. That is, the PSFCH format may be a sequence-based format in which the Physical Resource Block (PRB) size is 1, and ACK and NACK are identified based on differences in sequences and/or cyclic shifts. The PSFCH format is not limited thereto. The PSFCH resource may be placed in the last symbol or the last plurality of symbols of a slot. In addition, a periodicity N may be configured or predefined for the PSFCH resource. The periodicity N may be configured or predefined in slot units.

In FIG. 5, the vertical axis corresponds to the frequency domain, and the horizontal axis corresponds to the time domain. The PSCCH may be allocated to one symbol at the beginning of a slot, to a plurality of symbols starting from the beginning of a slot, or to a plurality of symbols starting from symbols other than the first symbol of the slot. The PSFCH may be allocated to one symbol at the end of a slot, or to a plurality of symbols at the end of a slot. Note that the above-mentioned "beginning of a slot" and "end of a slot" may omit consideration of symbols used for Automatic Gain Control (AGC) and for transmit/receive switching. That is, for example, when a slot consists of 14 symbols, the "beginning of a slot" and "end of a slot" may refer to the first and last symbols, respectively, within the 12 symbols excluding the first and last symbols of the slot. In the example illustrated in FIG. 5, three subchannels are configured in the resource pool, and two PSFCHs are allocated in the third slot after the slot in which the PSSCH is allocated. The arrow from the PSSCH to the PSFCH illustrates an example of a PSFCH associated with the PSSCH.

When the HARQ response in the groupcast of NR-V2X is groupcast option 2 which sends ACK or NACK, it is necessary to determine the resources to be used for sending and receiving the PSFCH. As illustrated in FIG. 5, in step S401, the terminal 20A, which is the sending terminal 20, performs a groupcast to the terminals 20B, 20C and 20D, which are the receiving terminals 20, via Sidelink Shared Channel (SL-SCH). In subsequent step S402, the terminal 20B uses PSFCH#B, the terminal 20C uses PSFCH#C, and terminal 20D uses PSFCH#D to send the HARQ response to the terminal 20A. When the number of available PSFCH resources is less than the number of receiving terminals 20 belonging to the group, as illustrated in the example of FIG. 5, it is necessary to determine how to allocate the PSFCH resources. Note that the transmitting terminal 20 may know the number of receiving terminals 20 in the groupcast. Note that in the groupcast option 1, only NACK is transmitted as a HARQ response, and ACK is not transmitted.

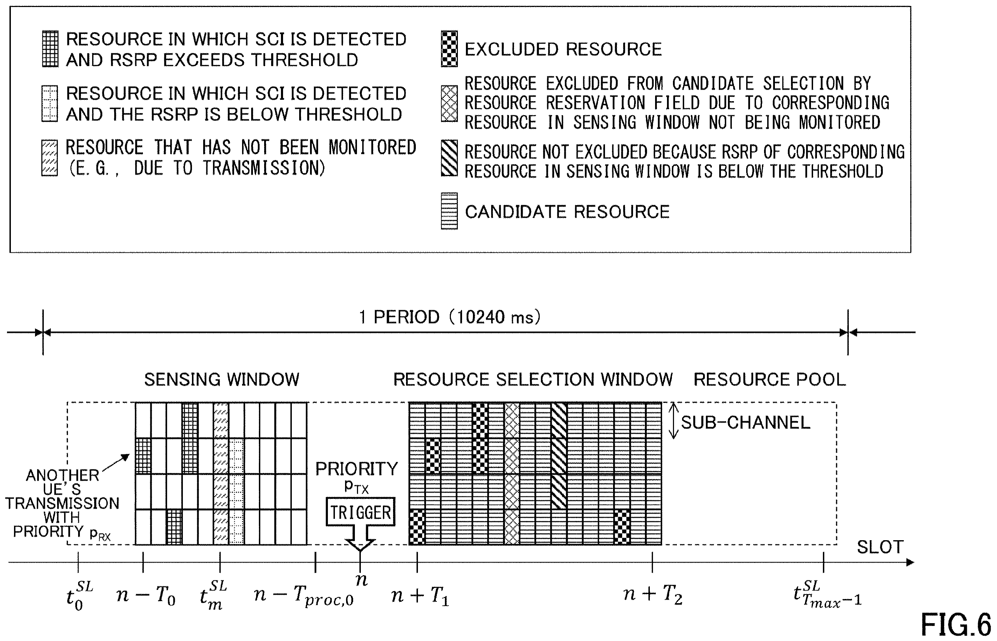

FIG. 6 is a diagram illustrating an example of a sensing operation in NR. In resource allocation mode 2, the terminal 20 selects and transmits a resource. As illustrated in FIG. 6, the terminal 20 performs sensing in a sensing window in the resource pool. By sensing, the terminal 20 receives a resource reservation field or a resource assignment field contained in an SCI transmitted from another terminal 20, and identifies available candidate resources in a resource selection window in the resource pool based on the field. The terminal 20 then randomly selects a resource from the available candidate resources.

Also, as illustrated in FIG. 6, the resource pool setting may have a period. For example, the period may be a period of 10240 milliseconds. FIG. 6 illustrates an example in which slots t₀^{SL} to t_{Tmax-1}^{SL} are configured as resource pools. The area of the resource pool within each period may be set by, for example, a bitmap.

Also, as illustrated in FIG. 6, it is assumed that the transmission trigger in the terminal 20 occurs in slot n, and the transmission priority is p_{TX}. In the sensing window from slot n-T₀ to the slot immediately before slot n-T_{proc, 0}, the terminal 20 can detect, for example, that another terminal 20 is transmitting with priority p_{RX}. If an SCI is detected in the sensing window and the Reference Signal Received Power (RSRP) exceeds the threshold, the resource in the resource selection window corresponding to the SCI is excluded. If an SCI is detected in the sensing window and the RSRP is less than the threshold, the resource in the resource selection window corresponding to the SCI is not excluded. The threshold may be, for example, a threshold Th_{pTX, pRX} configured or defined for each resource in the sensing window based on the priority p_{TX} and priority p_{RX}.

In addition, resources in the resource selection window that are candidates for resource reservation information corresponding to resources in the sensing window that were not monitored, for example, due to transmission, are excluded, such as slot tₘ^{SL} illustrated in FIG. 6.

In the resource selection window from slot n+T₁ to slot n+T₂, as illustrated in FIG. 6, resources occupied by other UEs are identified, and the resources from which the resources are excluded become available candidate resources. When the set of available candidate resources is S_{A}, if the S_{A} is less than 20% of the resource selection window, the threshold Th_{pTX}, _{pRX} configured for each resource in the sensing window may be increased by 3dB to perform resource identification again. That is, by increasing the threshold Th_{pTX, pRX} and performing resource identification again, the resources that are not excluded because the RSRP is less than the threshold may be increased, so that the set of candidate resources S_{A} becomes 20% or more of the resource selection window. If the S_{A} is less than 20% of the resource selection window, the operation of increasing the threshold Th_{pTX}, _{pRX} configured for each resource in the sensing window by 3dB to perform resource identification again may be repeated.

The lower layer of the terminal 20 may report the S_{A} to the higher layer. The higher layer of the terminal 20 may determine the resources to be used by performing random selection for the S_{A}. The terminal 20 may perform sidelink transmission using the determined resources. For example, the upper layer may be a MAC layer, and the lower layer may be a PHY layer or a physical layer.

Although the operation of the transmitting terminal 20 has been described in FIG. 6, the receiving terminal 20 may detect data transmission from another terminal 20 and receive data from the other terminal 20 based on the result of sensing or partial sensing.

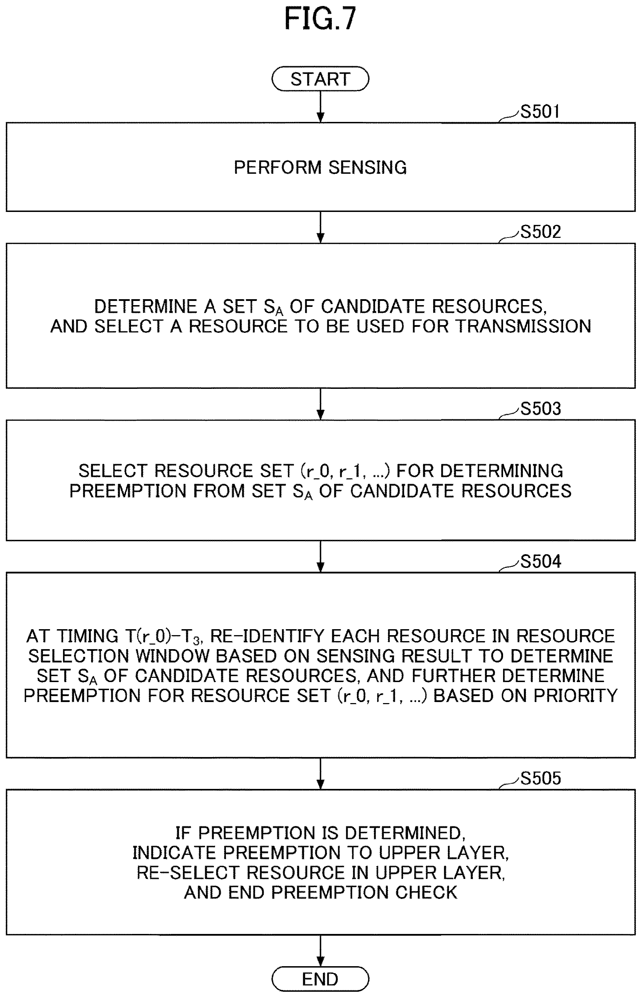

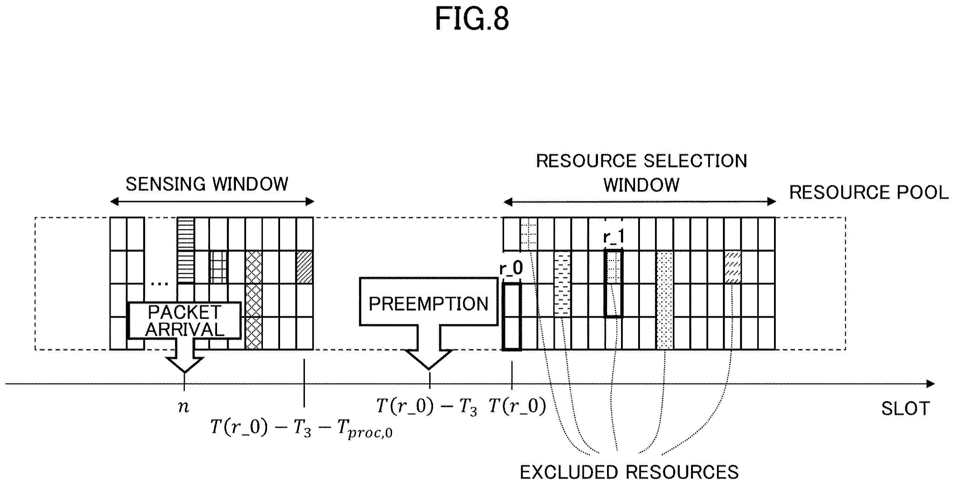

FIG. 7 is a flowchart illustrating an example of preemption in NR. FIG. 8 is a diagram illustrating an example of preemption in NR. In step S501, the terminal 20 performs sensing in the sensing window. When the terminal 20 performs a power saving operation, sensing may be performed in a predetermined limited period. Next, the terminal 20 identifies each resource in the resource selection window based on the sensing result, determines a set S_{A} of candidate resources, and selects a resource to be used for transmission (S502). Next, the terminal 20 selects a resource set (r_0, r_1, ...) for determining preemption from the set S_{A} of candidate resources (S503). The resource set may be indicated to the PHY layer from the upper layer as a resource to determine whether it is preempted or not.

In step S504, at the timing T (r_0)-T₃ illustrated in FIG. 8, the terminal 20 re-identifies each resource in the resource selection window based on the sensing result to determine the set S_{A} of candidate resources, and further determines preemption for the resource set (r_0, r_1, ...) based on the priority. For example, in r_1 illustrated in FIG. 8, the SCI transmitted from the other terminal 20 has been detected by the sensing again, and is not included in the S_{A}. If preemption is valid, and if the value prio_RX indicating the priority of the SCI transmitted from the other terminal 20 is lower than the value prio_TX indicating the priority of the transport block transmitted from the terminal 20 itself, the terminal 20 determines that the resource r_1 has been preempted. Note that the lower the value indicating the priority, the higher the priority. That is, if the value prio_RX indicating the priority of the SCI transmitted from the other terminal 20 is higher than the value prio_TX indicating the priority of the transport block transmitted from the terminal 20 itself, the terminal 20 does not exclude the resource r_1 from the S_{A}. Alternatively, if preemption is valid only for a specific priority (e.g., if sl-PreemptionEnable is pl1, pl2, ..., pl8), the priority is configured to prio_pre. At this time, if the value prio_RX indicating the priority of the SCI transmitted from the other terminal 20 is lower than prio_pre and the value prio_RX is lower than the value prio_TX indicating the priority of the transport block transmitted from the terminal 20 itself, the terminal 20 determines that the resource r_1 has been preempted.

In step S505, if the preemption is determined in step S504, the terminal 20 indicates the preemption to the upper layer, re-selects the resource in the upper layer, and ends the preemption check.

When re-evaluation is performed instead of the preemption check, the set S_{A} of the candidate resources is determined in step S504, and if the S_{A} does not include the resource of the resource set (r_0, r_1, ...), the resource is not used, and the resource is re-selected in the upper layer.

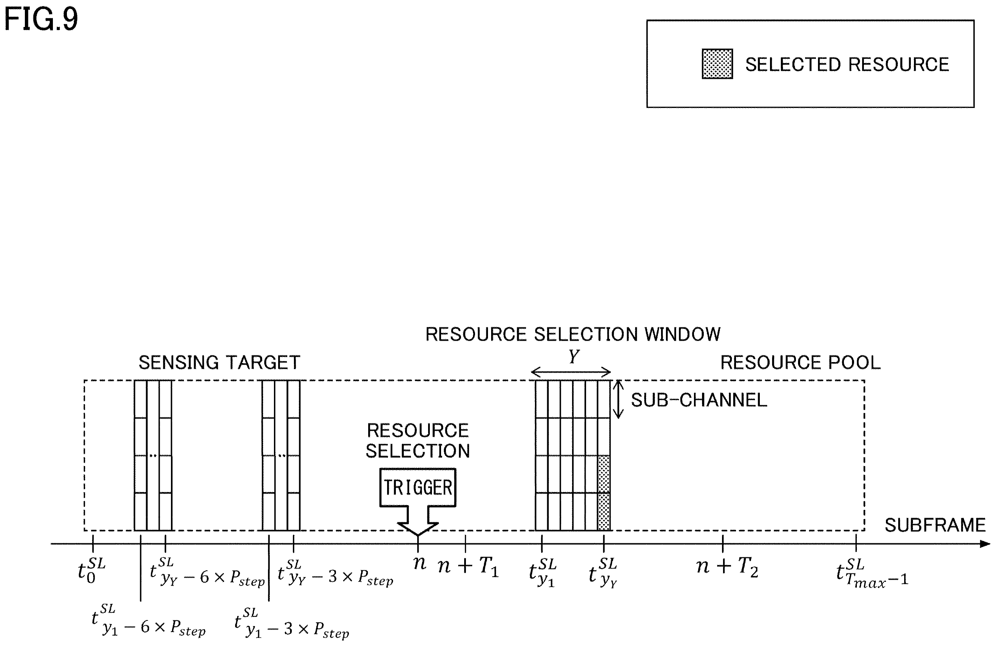

FIG. 9 is a diagram illustrating an example of a partial sensing operation in LTE. When partial sensing is configured from the upper layer in the LTE sidelink, the terminal 20 selects and transmits the resource as illustrated in FIG. 9. As illustrated in FIG. 9, the terminal 20 performs partial sensing for a part of the sensing window in the resource pool, that is, the sensing target. By partial sensing, the terminal 20 receives the resource reservation field included in the SCI transmitted from the other terminal 20, and identifies the available candidate resources in the resource selection window in the resource pool based on the field. Subsequently, the terminal 20 randomly selects a resource from the available candidate resources.

FIG. 9 illustrates an example in which subframes t₀^{SL} to t_{Tmax-1}^{SL} are configured as the resource pool. The target area of the resource pool may be set by, for example, a bitmap. As illustrated in FIG. 9, it is assumed that the transmission trigger in the terminal 20 occurs at subframe n. As illustrated in FIG. 9, the Y subframe from subframe t_{y1}^{sL} to subframe t_{yY}^{SL} from subframe n+T₁ to subframe n+T₂ may be configured as the resource selection window.

The terminal 20 can detect, for example, that another terminal 20 is transmitting at one or more sensing targets from subframe t_{y1-k×Pstep}^{SL} to subframe t_{yY-k×Pstep}^{SL} of Y subframe length. k may be determined by, for example, a 10 bit bitmap. FIG. 9 illustrates an example in which the third and sixth bits of the bitmap are configured to "1" indicating partial sensing. That is, in FIG. 9, subframe t_{y1-6×Pstep}^{SL} to subframe t_{yY-6×Pstep}^{SL} and subframe t_{y1-3×Pstep}^{SL} to subframe t_{yY-3×Pstep}^{SL} are configured as sensing targets. As described above, the kth bit of the bitmap may correspond to the sensing window from subframe t_{y1-k×Pstep}^{SL} to subframe t_{yY-k×Pstep}^{SL}. Note that yᵢ corresponds to the index (1...Y) in the Y subframe.

k may be set by a 10 bit bitmap or predetermined, and Pₛₜₑₚ may be 100 ms. However, when SL communication is performed by DL and UL carriers, Pₛₜₑₚ may be (U/(D+S+U)) *100 ms. U corresponds to the number of UL subframes, D corresponds to the number of DL subframes, and S corresponds to the number of special subframes.

If an SCI is detected in the sensing target and RSRP exceeds the threshold, resources in the resource selection window corresponding to the resource reservation field of the SCI are excluded. If an SCI is detected in the sensing target and RSRP is less than the threshold, resources in the resource selection window corresponding to the resource reservation field of the SCI are not excluded. The threshold may be, for example, a threshold Th_{pTX, pRX} configured or defined for each resource in the sensing target based on the sender priority p_{TX} and receiver priority p_{RX}.

As illustrated in FIG. 9, in the resource selection window configured in the Y sub-frame of the interval [n+T₁, n+T₂], the terminal 20 identifies the resources occupied by the other UE, and the resources obtained by excluding the resources are available candidate resources. Note that the Y sub-frames may not be continuous. If the set of available candidate resources is S_{A}, and the S_{A} is less than 20% of the resources in the resource selection window, the threshold Th_{pTX}, _{pRX} configured for each resource of the sensing target may be increased by 3dB to perform resource identification again.

That is, by increasing the threshold Th_{pTX, pRX} and performing resource identification again, the resources that are not excluded because the RSRP is less than the threshold may be increased. Furthermore, the RSSI of each resource in the S_{A} may be measured, and the resource with the smallest RSSI may be added to the set S_{B}. The operation of adding the resource with the smallest RSSI included in the S_{A} to the set S_{B} may be repeated until the set S_{B} of candidate resources becomes 20% or more of the resource selection window.

The lower layer of the terminal 20 may report the S_{B} to the higher layer. The higher layer of the terminal 20 may determine the resource to be used by performing random selection on the S_{B}. The terminal 20 may perform sidelink transmission using the determined resources. Note that the terminal 20 may periodically use the resources without performing sensing for a predetermined number of times (e.g., Cᵣₑₛₑₗ times) after securing the resources once.

Power saving based on random resource selection and partial sensing is specified in the NR sidelink. The terminal 20 to which partial sensing is applied performs reception and sensing only in a specific slot in the sensing window. That is, the terminal 20 may perform partial sensing in which resource identification is performed by sensing only limited resources compared with full sensing and resource selection is performed from the identified resource set. The terminal 20 may perform random selection in which resources in the resource selection window are identified as the identified resource set without excluding resources from the resources in the resource selection window and resource selection is performed from the identified resource set.

At the time of resource selection, the method of performing random selection and using sensing information at the time of reevaluation or preemption check may be treated as partial sensing or random selection.

The following 1) and 2) may be applied as the sensing operations. The sensing and monitoring operations may be replaced with each other, and at least one of measurement of received RSRP, acquisition of reserved resource information, and acquisition of priority information may be included in the operations.

### 1) Periodic-based partial sensing

In a mechanism for sensing only a portion of slots, an operation that determines the sensing slot based on the Reservation periodicity. Note that the reservation period is a value related to the resource reservation period field. Note that the period may be replaced by periodicity.

### 2) Contiguous partial sensing

An operation that determines a sensing slot based on an aperiodic reservation in a mechanism that senses only some slots. The non-periodic reservation is a value related to the time resource assignment field.

A plurality of resource assignment methods can be set for a resource pool. As one of the power saving functions, SL-DRX (Discontinuous Reception) is supported. That is, the reception operation is performed only in a predetermined time period.

As described above, partial sensing is supported as one of the power saving functions. In the resource pool in which partial sensing is configured, the terminal 20 may execute the periodic partial sensing described above. The terminal 20 may receive information from the base station 10 for configuring the resource pool in which partial sensing is configured and in which periodic reservation is enabled.

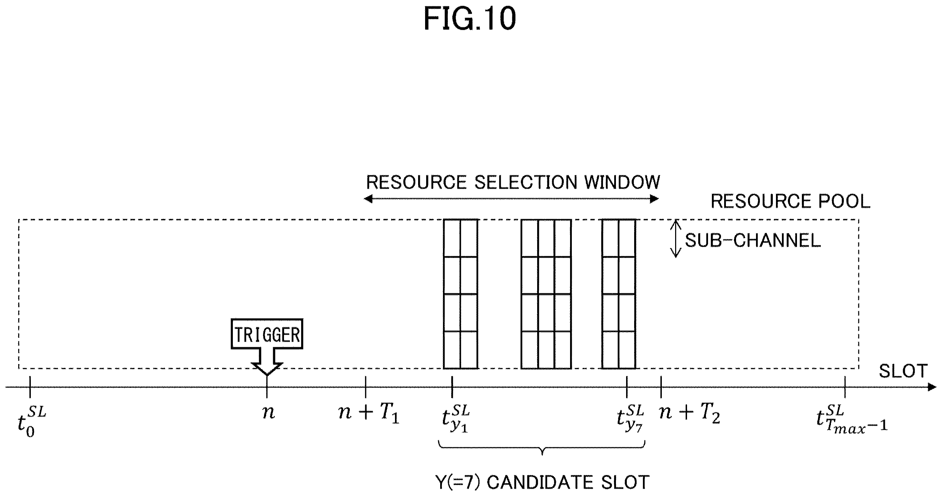

FIG. 10 is a diagram illustrating an example of periodic partial sensing. As illustrated in FIG. 10, the Y candidate slot for resource selection is selected from the resource selection window [n+T₁, n+T₂].

The t_{y}^{SL} may be used as one slot included in the Y candidate slot, and the t_{y-k×Preserve}^{SL} may be used as the target slot for periodic partial sensing.

The Pᵣₑₛₑᵣᵥₑ may correspond to all values included in the set sl-ResourceReservePeriodList, which is configured or predefined. Alternatively, the value of the pᵣₑₛₑᵣᵥₑ limited to a subset of the sl-ResourceReservePeriodList may be set or predefined. The Pᵣₑₛₑᵣᵥₑ and sl-ResourceReservePeriodList may be set for each transmission resource pool in resource allocation mode 2. Also, as a UE implementation, the period included in the sl-ResourceReservePeriodList other than the limited subset may be monitored. For example, the terminal 20 may additionally monitor occasions corresponding to P_RSVP_Tx.

With respect to the k value, the terminal 20 may monitor the most recent sensing occasion in a certain reservation cycle before the slot n of the resource selection trigger or before the head slot of the Y candidate slot subject to processing time limitation. The terminal 20 may additionally monitor periodic sensing occasions corresponding to a set of k values of 1 or more. For example, the k value may be set to a value corresponding to the most recent sensing occasion in a certain reservation cycle before the slot n of the resource selection trigger or before the head slot of the Y candidate slot subject to processing time limitation, and a value corresponding to the sensing occasion immediately before the most recent sensing occasion in the certain reservation cycle.

As described above, partial sensing is supported as one of the power saving functions. In the resource pool in which partial sensing is configured, the terminal 20 may execute the continuous partial sensing described above. The terminal 20 may receive information from the base station 10 for configuring a resource pool in which partial sensing is configured and non-periodic reservation is enabled.

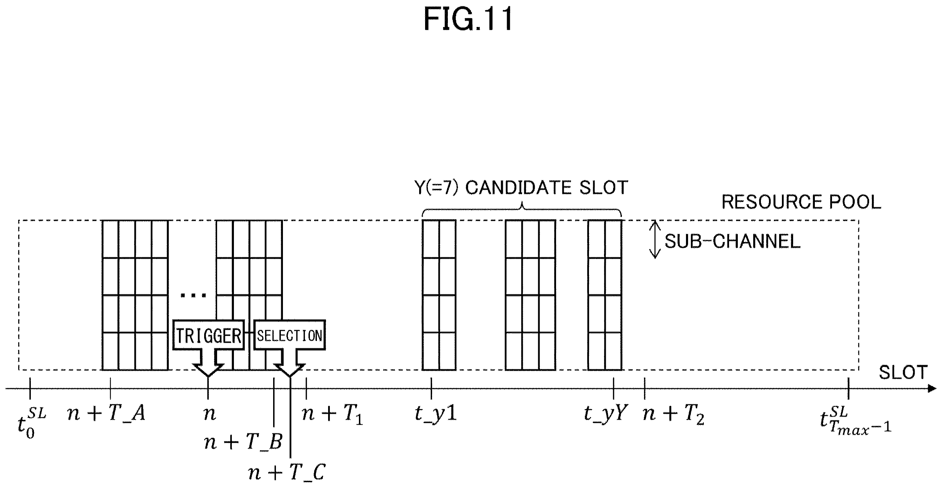

FIG. 11 is a diagram illustrating an example of continuous partial sensing. As illustrated in FIG. 11, when the trigger of resource selection is slot n, the terminal 20 selects a Y candidate slot for resource selection from the resource selection window [n+T₁, n+T₂]. FIG. 11 is an example of the case where Y=7. As illustrated in FIG. 11, the first of the Y candidate slots is designated as slot t_{y1}, the next slot is designated as t_{y2}, ..., and the last of the Y candidate slots is designated as slot t_{yY}.

The terminal 20 performs sensing in the interval [n+T_{A}, n+T_{B}], and executes resource selection at n+T_{B} or later as of n+T_{B} (n+T_{C}). The periodic partial sensing described above may be additionally executed. T_{A} and T_{B} in the interval [n+T_{A}, n+T_{B}] may be any values. In addition, n may be replaced with the index of any of the Y candidate slots.

In addition, the symbol "[" may be replaced by the symbol "(", the symbol "]" may be replaced with the symbol ")". For example, the interval [a, b] is the interval from slot a to slot b and includes slots a and b. For example, the interval (a, b) is the interval from slot a to slot b and does not include slots a and b.

The candidate resource subject to resource selection is described as Y candidate slot, but all slots in the interval [n+T₁, n+T₂] may be candidate slots or some slots may be candidate slots.

As a method for improving reliability and delay performance, interterminal cooperation is specified. For example, inter-terminal coordination method 1 and inter-terminal coordination method 2 illustrated below are specified. The terminal 20 that transmits coordination information is described as UE-A, and the terminal 20 that receives coordination information is described as UE-B.

Interterminal coordination method 1) For transmission of UE-B, a preferred resource set and/or a non-preferred resource set are transmitted from UE-A to UE-B. Hereinafter, Inter-UE coordination method 1 is also referred to as IUC scheme 1.

Inter-UE coordination method 2) UE-A sends to UE-B information indicating that a collision with another transmission or reception is expected in the resource indicated by SCI received from UE-B, and/or that the collision is detected. This information may be transmitted via PSFCH. Hereinafter, Inter-UE coordination method 2 is also referred to as IUC scheme 2.

3GPP release 16 or release 17 sidelink is specified for 1) and 2) illustrated below.
1) Environment where only 3GPP terminals exist in ITS (Intelligent Transport Systems) band
2) Environment where UL resources are made available to SL in FR1 (frequency range 1) and FR2 license bands defined in NR

As a sidelink for 3GPP release 18 and later, it is considered to newly target unlicensed bands. For example, unlicensed bands such as 5 GHz-7GHz band and 60 GHz band.

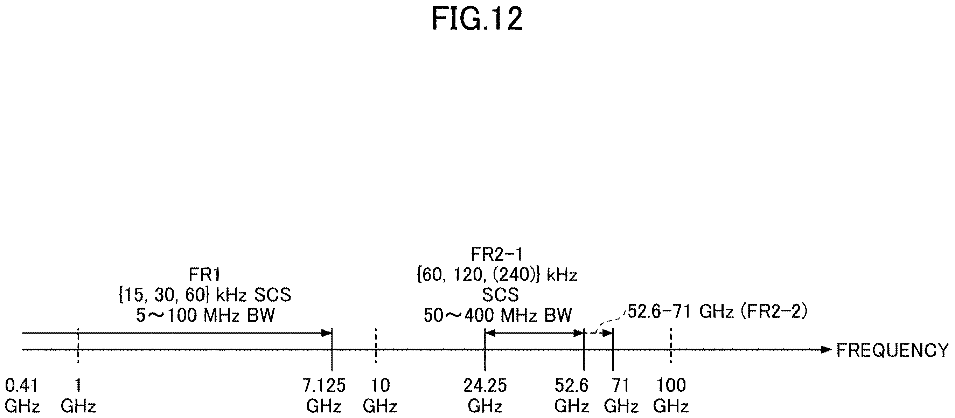

FIG. 12 illustrates an example of frequency bands used in wireless communication systems. In the NR specifications of 3GPP release 15 and release 16, it is considered to operate frequency bands of 52.6 GHz or higher, for example. As illustrated in FIG. 12, FR (frequency range) 1, which is currently specified for operation, is a frequency band from 410 MHz to 7.125 GHz, SCS (sub carrier spacing) is 15, 30 or 60 kHz, and bandwidth is 5 MHz to 100 MHz.

FR2-1 is a frequency band from 24.25 GHz to 52.6 GHz, SCS is 60, 120 or 240 kHz, and bandwidth is 50 MHz to 400 MHz. As illustrated in FIG. 12, FR2-2 may assume a frequency band from 52.6 GHz to 71 GHz. Furthermore, it may be assumed that frequency bands exceeding 71 GHz are supported.

When using bands exceeding 52.6 GHz, cyclic prefix-orthogonal frequency division multiplexing (CP-OFDM)/Discrete Fourier Transform-Spread (DFT-S-OFDM) with larger Sub-Carrier Spacing (SCS) may be applied.

In high frequency bands such as FR2-2, increase of phase noise between carriers becomes a problem. Therefore, application of larger (wider) SCS or single carrier waveform may be necessary.

For example, 5.15 GHz to 5.35 GHz, 5.47 GHz to 5.725 GHz, and 5.925 GHz or more are assumed as unlicensed bands in the 5 GHz-7GHz band.

For example, 59 GHz to 66 GHz, 57 GHz to 64 GHz or 66 GHz, and 59.4 GHz to 62.9 GHz are assumed as unlicensed bands in the 60 GHz band.

In the unlicensed band, various regulations are specified so as not to affect other systems or other devices.

For example, in the 5 GHz-7GHz band, LBT (Listen before talk) is executed for channel access. The base station 10 or the terminal 20 performs power detection for a predetermined period of time immediately before transmission, and stops transmission if the power exceeds a certain value, that is, if transmission of another device is detected (it may be called LBT failure). The maximum channel occupancy time (Maximum channel occupancy time, MCOT) is also specified. The MCOT is the maximum time interval allowed to continue transmission when transmission is started after LBT. For example, it is 4 ms in Japan.

In addition, as an occupied channel bandwidth (Occupied channel bandwidth, OCB) requirement, when transmission uses a certain carrier bandwidth, it must use more than X% of that bandwidth. For example, in Europe, it is required to use 80% to 100% of the nominal channel bandwidth (NCB). The purpose of the OCB requirement is to ensure that power detection for channel access is performed correctly.

In addition, in order to avoid excessive interference with the maximum transmission power and the maximum power spectral density, it is stipulated that transmission is performed at a predetermined transmission power or less. For example, in Europe, the maximum transmission power is 23 dBm in the 5150 MHz-5350 MHz band. In Europe, for example, the maximum power spectral density is 10 dBm/MHz in the 5150 MHz-5350 MHz band.

For example, in the 60 GHz band, LBT is performed for channel access. The base station 10 or the terminal 20 performs power detection for a predetermined period immediately before transmission, and stops transmission when the power exceeds a certain value, that is, when transmission of another device is detected. Also, regarding the maximum transmission power and the maximum power spectral density, it is specified that transmission is performed at a predetermined transmission power or less. It is also specified that the transmission has the ability to satisfy the OCB requirements.

In NR, four types of channel access procedures are specified based on the difference in LBT behavior in the time direction (sensing duration). Note that this sensing is different from the side-link sensing described above, and is described as LBT sensing for the sake of distinction.
Type 1) Variable time LBT sensing is performed before transmission. Also called Category 4LBT.
Type 2A) 25 µs LBT sensing is performed before transmission. Also called Category 2LBT.
Type 2B) 16 µs LBT sensing is performed before transmission. Also called Category 2LBT.
Type 2C) Transmission starts without LBT. Same as licensed band in transmission.

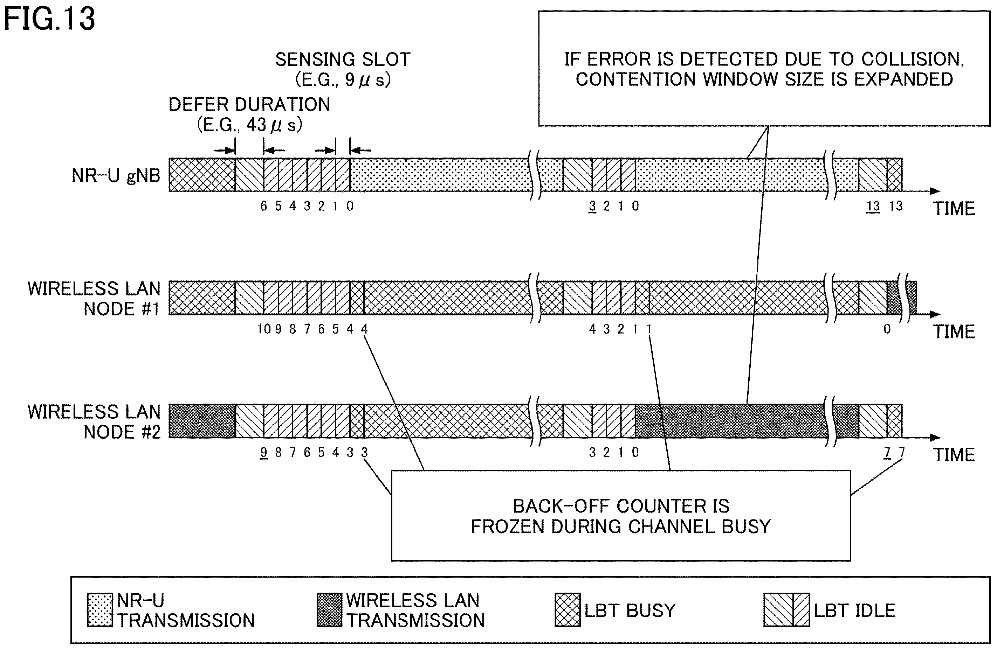

FIG. 13 illustrates LBT example (1). FIG. 13 illustrates an example of type 1 channel access procedure. Type 1 is further classified into 4 classes indicating channel access priority classes (channel access priority class, CAPC) based on the difference in LBT sensing length. LBT sensing is performed in the following two periods.

The first period is a prioritization period or a defer duration and has a length of 16 + 9 × mₚ [µs]. A fixed value of mₚ is specified for each channel access priority class.

The second period is the back-off procedure and has a length of 9 × N [µs]. The value of N is randomly determined from a range (see the CWS adjustment procedure in Non-Patent Literature 4). N is the initial value of the back-off counter, and the value of the back-off counter decreases by 1 each time the power of the signal of another device is not detected during 9 [µs].

In the above, the LBT sensing period of 9 µs may be called an LBT sensing slot duration.

In the example of FIG. 13, mₚ=3, and the defer duration is 43 µs. As illustrated in FIG. 13, the back-off counter is frozen during channel busy. Also, as illustrated in FIG. 13, if the transmission of the NR-U gNB and the wireless LAN node #2 collide and an error is detected, the contention window size (CWS) of the NR-U gNB is expanded from 3 to 13.

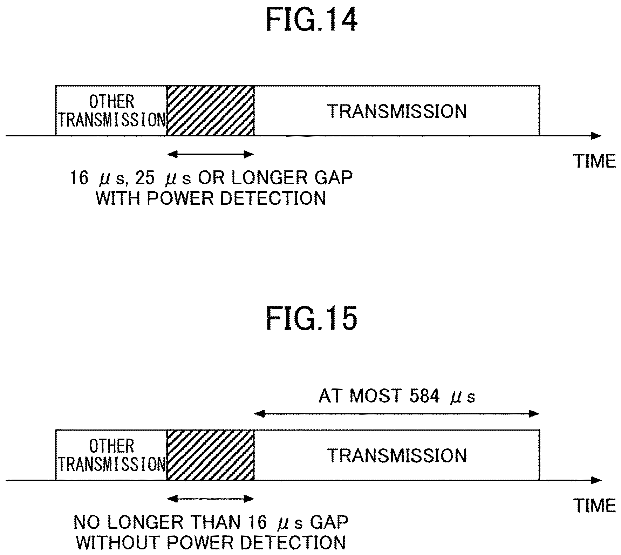

FIG. 14 is a diagram illustrating LBT example (2). FIG. 14 is an example of a type 2A or type 2B channel access procedure without random back-off. A gap with power detection of 25 µs or longer than 25 µs for type 2A and 16 µs for type 2B is configured before transmission.

FIG. 15 is a diagram illustrating LBT example (3). FIG. 15 is an example of a type 2C channel access procedure. As illustrated in FIG. 15, no power detection is performed before transmission, and transmission is performed immediately after a gap not exceeding 16 µs. The transmission period may be at most 584 µs.

As described above, NR-U (Unlicensed) supports multiple LBT types. In Type 1, the initial value N of the back-off counter is configured to a random number in the interval from 0 to CWₚ, the range of which is determined based on the channel access priority class p. Table 1 illustrates an example of the values defined for each channel access priority class p in the uplink (UL), including *mₚ,* the minimum value of CWₚ (CWₚ, ₘᵢₙ), and the maximum value of CWₚ (CWₚ, ₘₐₓ).

**[Table 1]**

| Class p | mₚ | CW_{min, p} | CW_{max, p} |
|---|---|---|---|
| 1 | 2 | 3 | 7 |
| 2 | 2 | 7 | 15 |
| 3 | 3 | 15 | 1023 |
| 4 | 7 | 15 | 1023 |

As illustrated in Table 1, mₚ, CWₚ, ₘᵢₙ, and CWₚ, ₘₐₓ are determined by channel access priority class p. When p is 1, the LBT duration is calculated from Table 1 to be 34 µs minimum and 88 µs maximum. When p is 2, the LBT duration is calculated from Table 1 to be 34 µs minimum and 160 µs maximum. When p is 3, the LBT duration is calculated from Table 1 to be 43 µs minimum and 9286 µs maximum. When p is 4, the LBT duration is calculated from Table 1 to be 79 µs minimum and 9286 µs maximum. Note that Table 1 is a table used for UL.

The LBT type and channel access priority class may be determined based on indication from the base station 10, the channel type, etc. The gap of 25 µs or 16 µs may be set by scheduling of the base station 10 in consideration of T_{A} (Timing Advance) and CP extension.

The LBT applied to channel access is executed for each predetermined bandwidth (e.g., 20 MHz).The predetermined bandwidth may be referred to as an LBT channel, an RB set (Resource Block Set), or an LBT band, but is not limited thereto. If no power is detected in the LBT channel in which each transmission is included, the transmission may be executed. On the other hand, each CC in the Uu can be defined with a bandwidth wider than that of the LBT channel. That is, wideband operation is supported. The Uu is a wireless interface between the UTRAN (Universal Terrestrial Radio Access Network) and the UE (user equipment).

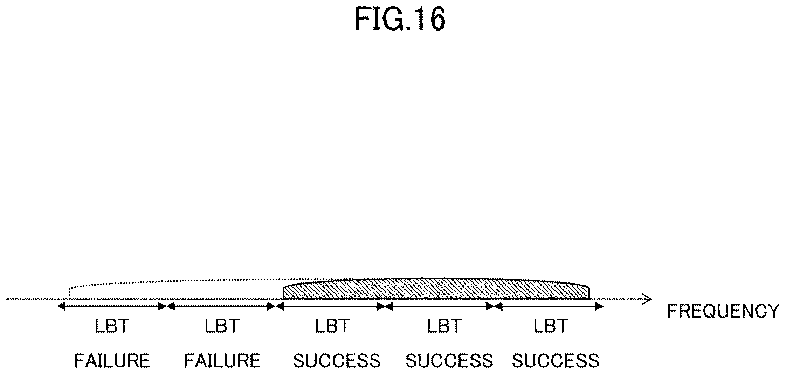

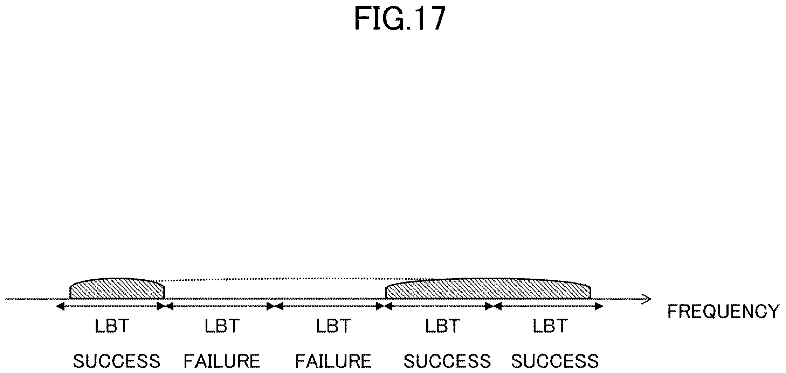

FIG. 16 is a diagram illustrating an example (1) of wideband operation. FIG. 17 is a diagram illustrating an example (2) of wideband operation. In the case of wideband operation in an unlicensed band, as illustrated in FIG. 16 or FIG. 17, when LBT in a gNB succeeds in some or all of the LBT channels, transmission may be permitted in the LBT channel where LBT succeeds. As illustrated in FIG. 16, a gNB may transmit a single continuous block, or as illustrated in FIG. 17, a gNB may transmit multiple discontinuous blocks.

For DL in an unlicensed band, DL type A, which executes LBT for each channel, and DL type B, which executes LBT type 1 in a randomly selected channel and executes LBT type 2A in the remaining channels, are specified.

DL type A is further classified into type A1 and type A2. In type A1, the contention window CWₚ is determined for each channel. In type A2, the maximum CWₚ determined for each channel is used.

DL type B is further classified into type B1 and type B2. In type B1, a single CWₚ is applied to all channels. In type B2, the maximum CWₚ determined for each channel is used.

When Listen-Before-Talk (LBT) is successful on some or all of the LBT channels in the gNB, transmission of the Physical Downlink Shared Channel (PDSCH) is permitted on the LBT channel(s) where LBT was successful. The gNB may perform transmission using a single block that is continuous in the frequency direction, or the gNB may perform transmission using a plurality of blocks that are discontinuous in the frequency direction.

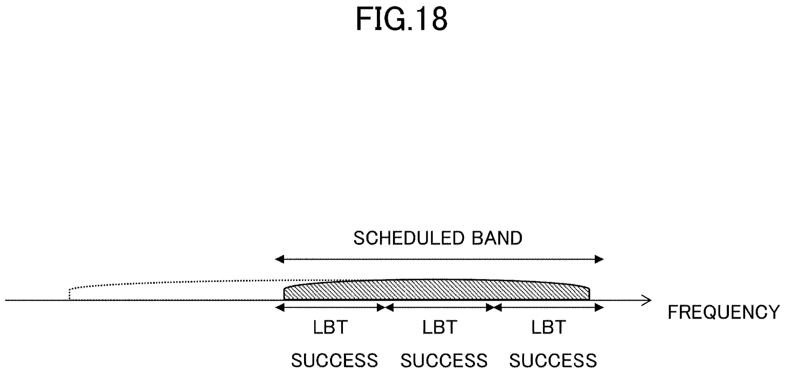

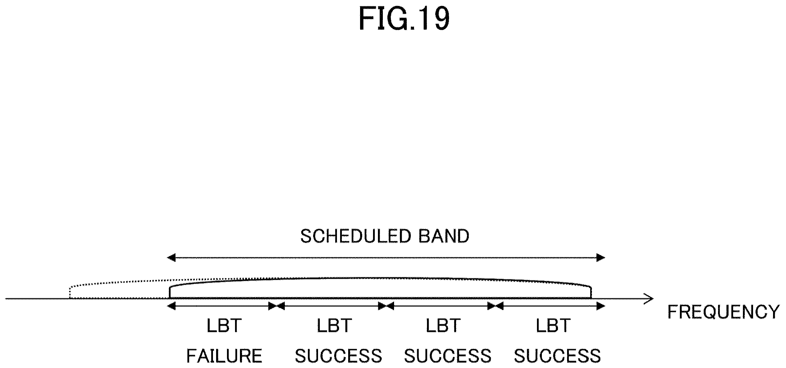

FIG. 18 is a diagram illustrating an example (3) of broadband operation. FIG. 19 is a diagram illustrating an example (4) of broadband operation. As illustrated in FIG. 18 or FIG. 19, when the LBT in the UE succeeds in all of the LBT channels in the scheduled band, the transmission may be permitted. As illustrated in FIG. 19, when the LBT fails in some of the LBT channels, the transmission may not be permitted.

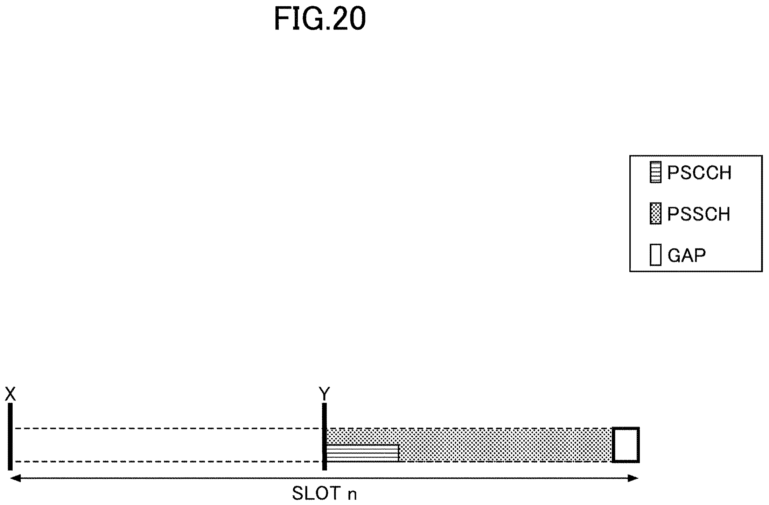

FIG. 20 is a diagram illustrating an example (1) of transmission in the embodiment of the present invention. As illustrated in FIG. 20, for PSCCH/PSSCH transmission, two candidate start symbols are supported in 1 slot. PSCCH/PSSCH may be replaced by PSCCH and/or PSSCH.

When a certain PSCCH/PSSCH transmission is performed in slot n, there is a possibility that transmission cannot be started at first start symbol X due to LBT failure. On the other hand, LBT may succeed at second start symbol Y in the middle of slot n. By enabling PSCCH/PSSCH transmission from second start symbol Y, the resource utilization efficiency can be improved. When transmission is performed from second start symbol Y, a part of PSSCH is not transmitted.

Note that the LBT may be performed immediately before first candidate starting symbol X or immediately before second candidate starting symbol Y. When the LBT immediately before first candidate starting symbol X is successful, the terminal 20 may perform transmission from first candidate starting symbol X, and when the LBT immediately before second candidate starting symbol Y is successful, the terminal 20 may perform transmission from second candidate starting symbol Y.

Here, it is necessary to determine the details of operation when two candidate starting symbols are available. For example, if two candidate starting symbols are available, it is necessary to determine the various parameters related to SL appropriately. For example, it is necessary to determine how to use the PSFCH overhead indication field and N_{symb}^{PSFCH} of the 1st stage SCI defined for determining the transport block size (TBS). Note that the TBS is determined based on the number of PSCCH/PSSCH symbol references configured or pre-configured. For example, it is necessary to determine how to select the start symbol when transmitting across the plurality of RB sets.

With respect to the TBS determination, the following operation may be performed (see Non-Patent Literature 5).

The size of the PSFCH overhead indication field may be 0 bits when the period of the PSFCH occasion is 0 or 1. Since the overhead is always the same, there is no need for indication.

The size of the PSFCH overhead indication field may be 1 bit when the period of the PSFCH occasion is longer than 1 (e.g., when the period is 2 or 4). Since the overhead is different between a slot with a PSFCH and a slot without a PSFCH, it is indicated which slot to use.

N_{symb}^{PSFCH} corresponds to the number of PSFCH overhead symbols per slot. If the period of the PSFCH occasion is 0, there is no PSFCH overhead indication via SCI, and N_{symb}^{PSFCH} is 0. If the period of the PSFCH occasion is 1, there is no PSFCH overhead indication via SCI, and N_{symb}^{PSFCH} is 3. If the period of the PSFCH occasion is 2 or 4, N_{symb}^{PSFCH} is 3 when the PSFCH overhead indication is 1, and N_{symb}^{PSFCH} is 0 when the overhead indication is 0.

Therefore, if two candidate starting symbols are available or configured or pre-configured, at least one of the following operations 1), 2) and 3) may be applied.

Operation 1) The SL parameters illustrated in items 1) to 5) below may be configured or pre-configured for each of the first transmission candidate starting symbol X and the second transmission candidate starting symbol Y. Different parameters may be configured or pre-configured for transmission starting from the first candidate symbol X and transmission starting from the second candidate symbol Y, respectively.
1) SL-PSCCH-Config (e.g., sl-TimeResourcePSCCH, sl-FreqResourcePSCCH). SL-PSCCH-Config is a configuration related to PSCCH and may include time resources, frequency resources, etc. For example, the time resources of PSCCH may be 3 symbols for X and 2 symbols for Y.
2) SL-PSSCH-Config (e.g., sl-Scaling). SL-PSSCH-Config is a configuration related to PSSCH and may include parameters for adjusting the amount of PSSCH resources to be considered when determining TBS, etc.
3) SL-MinMaxMCSList. SL-MinMaxMCSList may include parameters for determining the maximum or minimum MCS available.
4) sl-PowerControl(e.g., sl-P0-PSSCH-PSCCH). sl-PowerControl may include parameters for determining the power of SL transmission.
5) SL-CSI-RS-Config (e.g., sl-CSI-RS-FirstSymbol). SL-CSI-RS-Config is a configuration for CSI-RS and may include parameters for determining the symbol to which CSI-RS is mapped.

The SL parameters configured or pre-configured for each of the first candidate starting symbol X and the second candidate starting symbol Y are not limited to the parameters illustrated in 1) to 5) above.

Any of the parameters illustrated in 1) to 5) above may be common parameters between the first candidate starting symbol X and the second candidate starting symbol Y.

If no parameter is configured or pre-configured for the second candidate starting symbol Y, one configured or pre-configured parameter may be applied to transmission from either the first candidate starting symbol X or the second candidate starting symbol Y.

According to the operation 1) above, the optimum parameter can be configured or pre-configured for each case where transmission starts from the first candidate starting symbol and transmission starts from the second candidate starting symbol.

Operation 2) With respect to the PSFCH overhead indication field and/or N_{symb}^{PSFCH} in the 1st stage SCI, different operations may be performed depending on whether two transmission candidate starting symbols are available or not.

When two candidate starting symbols are available, the following operations a), b), and c) may be performed.
a) The PSFCH overhead indication field may always be 0 bits regardless of the PSFCH cycle. N_{symb}^{PSFCH} may always be a constant value. For example, N_{symb}^{PSFCH} may be a defined value (e.g., 0 or 3, etc.) or a configured or pre-configured value.
b) The PSFCH overhead indication field may always be 1 bit regardless of the PSFCH cycle. The value of N_{symb}^{PSFCH} may be K if the PSFCH overhead indication is 1. K may be a defined value (e.g., 3, etc.) or a configured or pre-configured value.

The value of N_{symb}^{PSFCH} may be L if the PSFCH overhead indication is 0. L may be a defined value (e.g., 0) or a configured or pre-configured value.

The PSFCH overhead indication field may be replaced with another field. For example, it may be replaced with a field indicating whether the "number of PSCCH/PSSCH symbols in the slot with PSFCH" or the "number of PSCCH/PSSCH reference symbols configured or pre-configured" is used to calculate the TBS.

If the field is 1, the "number of PSCCH/PSSCH symbols in the slot with PSFCH" may be used to calculate the TBS. For calculating the TBS, the number of symbols for SL in 1 slot - 2 - PSFCH overhead (i.e., 3) may be used. If the field is 0, the "number of PSCCH/PSSCH reference symbols configured or pre-configured" may be used to calculate the TBS, and the value of N_{symb}^{PSFCH} may be set to 0.

Alternatively, the field may be replaced with a field that indicates whether to use the number of PSCCH/PSSCH symbols in a slot without PSFCH when transmission starts from the first candidate starting symbol X, or the configured or pre-configured number of PSCCH/PSSCH reference symbols, for the purpose of calculating the Transport Block Size (TBS).

Alternatively, the field may be replaced with a field that indicates which of a plurality of configured or pre-configured numbers of PSCCH/PSSCH reference symbols is to be used for calculating the Transport Block Size (TBS).

c) The PSFCH overhead indication field may be 0 bits or 1 bit based on the PSFCH period as in the prior art.

For example, the value of N_{symb}^{PSFCH} may always be constant. For example, the value of N_{symb}^{PSFCH} may be a defined value (e.g. 0, 3 etc.), a configured or pre-configured value, or a difference between "number of PSCCH/PSSCH symbols in a slot with PSFCH" and "configured or pre-configured number of PSCCH/PSSCH reference symbols."

The value of N_{symb}^{PSFCH} may be K if the PSFCH overhead indication is 1. K may be a defined value (e.g., other than 3), a configured or pre-configured value.

The value of N_{symb}^{PSFCH} may be L if the PSFCH overhead indication is 0. L may be a defined value (e.g., 0) or a configured or pre-configured value.

Operation 2) may be applied only to slots without PSFCH or to slots with PSFCH. The value of N_{symb}^{PSFCH} may be subtracted from the "configured or pre-configured number of PSCCH/PSSCH reference symbols" or may not be included in the "configured or pre-configured number of PSCCH/PSSCH reference symbols."

According to the aforementioned operation 2), it is possible to optimize the handling of the PSFCH overhead in cases where the Transport Block Size (TBS) is determined based on the configured or pre-configured number of PSCCH/PSSCH reference symbols.

Operation 3) When transmission across the plurality of RB sets is performed, it may be determined from which candidate starting symbol to start transmission of PSCCH/PSSCH transmission across N RB sets based on which candidate starting symbol can start transmission in each RB set.

Whether to execute transmission may be determined based on whether transmission can be started from each candidate starting symbol in all N RB sets.

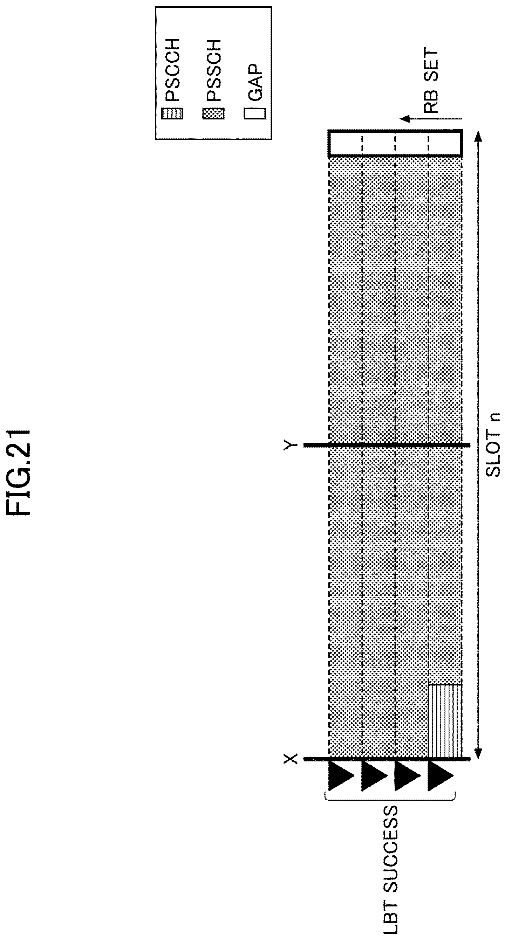

FIG. 21 is a diagram illustrating transmission example (2) in the embodiment of the present invention. As illustrated in FIG. 21, only when transmission can be started from the first candidate starting symbol X in all N RB sets (4 in the figure), the PSCCH/PSSCH transmission may be executed from X.

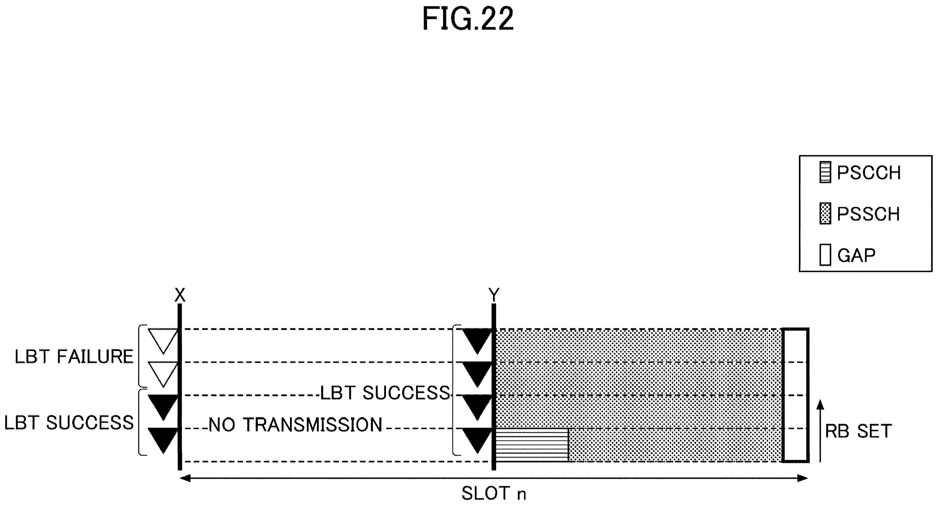

FIG. 22 is a diagram illustrating transmission example (3) in the embodiment of the present invention. If transmission cannot be started from the first candidate starting symbol X in at least one of the N RB sets, the PSCCH/PSSCH transmission may not be executed from X in all N RB sets.

As illustrated in FIG. 22, only when transmission can be started from the second candidate starting symbol Y in all N RB sets, the PSCCH/PSSCH transmission may be executed from Y. On the other hand, if at least one RB set among the N RB sets cannot be transmitted from the second candidate starting symbol Y, the PSCCH/PSSCH transmission may not be transmitted in the slot in all the N RB sets.

The "no transmission" may mean dropping the transmission or postponing the transmission.

By the operation described above, the transmission can be executed only when the transmission of the transport block can be surely executed. In other words, the transmission with low reception success probability can be avoided.

In addition, whether the transmission is executed or not may be determined based on whether the transmission can be started from each candidate starting symbol in the specific number or more of the N RB sets.

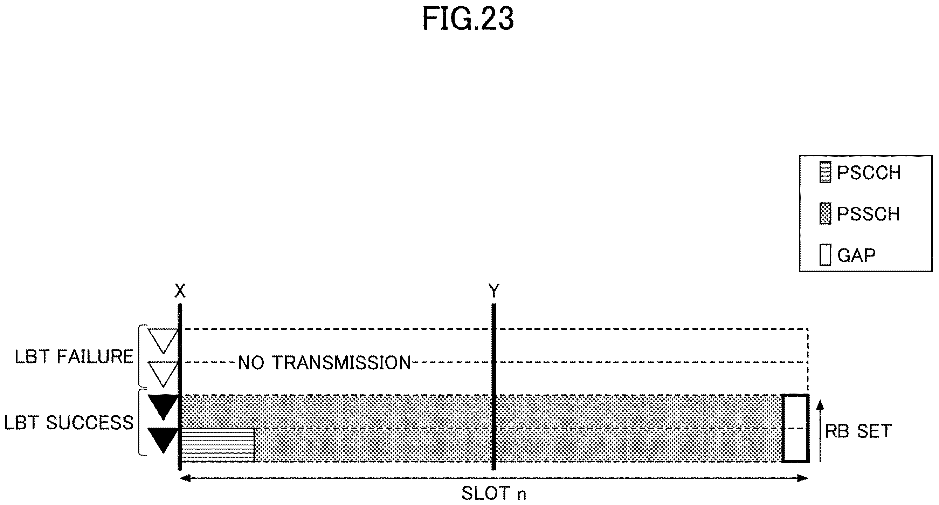

FIG. 23 is a diagram illustrating an example (4) of the transmission in the embodiment of the present invention. As illustrated in FIG. 23, when the transmission can be started from the first candidate starting symbol X with N1 RB sets out of the N RB sets, the PSCCH/PSSCH transmission TB may be transmitted with N1 RB sets. In the example illustrated in FIG. 23, N1 = 2. N1 may be a value greater than or equal to the minimum value N1_min. N1_min may be a defined value or a configured or pre-configured value.

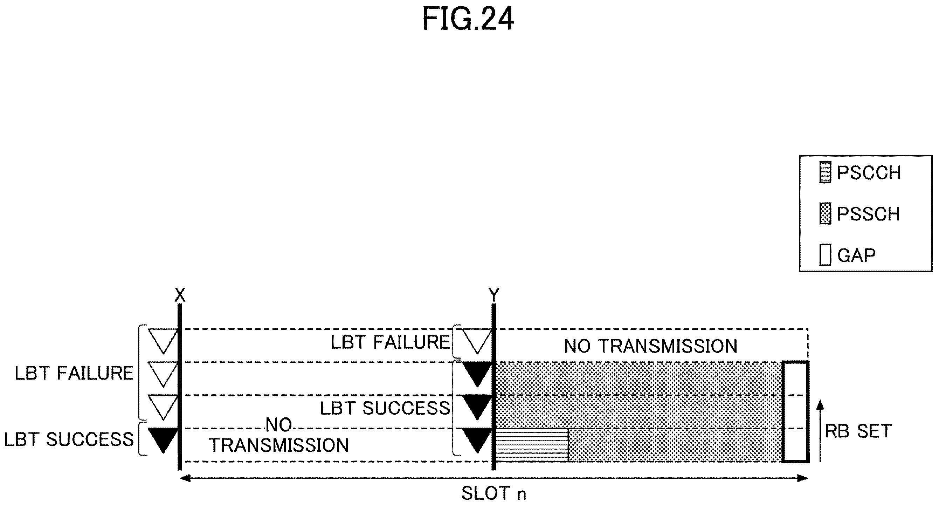

FIG. 24 is a diagram illustrating an example (5) of transmission in the embodiment of the present invention. As illustrated in FIG. 24, if the number of RB sets that can start transmission from the first candidate starting symbol X among the N RB sets is less than N1_min, the PSCCH/PSSCH transmission need not be executed from X for all the N RB sets. In the example of FIG. 24, N1_min is 2 or more.

As illustrated in FIG. 24, if the number of RB sets that can start transmission from the second candidate starting symbol Y among the N RB sets is N2, the PSCCH/PSSCH transmission TB may be transmitted from the second candidate starting symbol Y among the N RB sets. N2 may be equal to or greater than the minimum value N2_min. In the example illustrated in FIG. 24, N2=3. Transmission may not be executed for (N - N2) RB sets. N2_min may be a defined value or a configured or pre-configured value. N2_min may be N, and transmission may be performed from Y only when transmission can be performed for all N RB sets.

If the number of RB sets that can start transmission from the second candidate starting symbol Y among N RB sets is less than N2_min, the PSCCH/PSSCH transmission may not be performed from Y for all N RB sets.

If N1 or N2 RB sets are non-consecutive RB sets, the maximum number of consecutive RB sets among the non-consecutive RB sets may be replaced by N1 or N2 to apply the above operation. N1_min < N2_min may be applied.

According to the above-described operation, the available resources can be utilized to the maximum extent.

In the above-described embodiment, a conventional configuration of SL channels and SL signals is used, but is not limited thereto. For example, the present embodiment may also be applied when an interlaced channel is applied as a configuration to satisfy OCB requirements.

The above-described embodiment may be applied only when predetermined conditions are satisfied. For example, it may be applied in relation to a predetermined SL channel or SL signal. For example, the present embodiment may be applied to any of PSCCH/PSSCH, PSFCH, S-SSB, and SL positioning RS. For example, it may be applied based on predetermined configurations or pre-configurations. For example, the present embodiment may be applied when the resource pool is given to "enable" the present embodiment by configuration or pre-configuration. For example, the present embodiment may not be applied when the LBT method for the second SL transmission is not or is no longer Type 1.

In order to apply the LBT type 2A, 2B, or 2C, additional transmission (additional TX), for example, CP extension, etc. may be performed immediately before transmission P.

It should be noted that that the applicability of the present embodiment and the UE capability related to the operation may be defined, and may be reported to the base station 10 and/or the terminal 20, or may not be reported.

The SL transmission of the UE may be any of PSCCH, PSSCH, PSFCH, S-SSB, or SL-PRS, and different channels or signals may be applied to each operation of the present embodiment.

It should be noted that at least one of the SL transmissions of the UE may be UL transmission.

This embodiment may be applied to any of resource selection, resource re-selection, re-evaluation, and preemption check.

The method in the embodiment of the present invention is not limited to the case of direct communication between terminals described above, but may be applied to other similar cases.

The embodiment described above is not limited to V2X terminals, but may be applied to terminals performing D2D communication.

The embodiment described above can optimize the handling of PSFCH overhead when the TBS is determined based on the number of PSCCH/PSSCH reference symbols configured or pre-configured.

That is, it is possible to determine suitable parameters to be applied to transmission in direct communication between terminals in an unlicensed band.

### (Device Configuration)

Next, an example of the functional configuration of the base station 10 and the terminal 20 that execute the processing and operation described so far will be described. The base station 10 and the terminal 20 include a function for executing the above-described embodiment. However, the base station 10 and the terminal 20 may each have only a part of the functions in the embodiment.

### <Base Station 10>

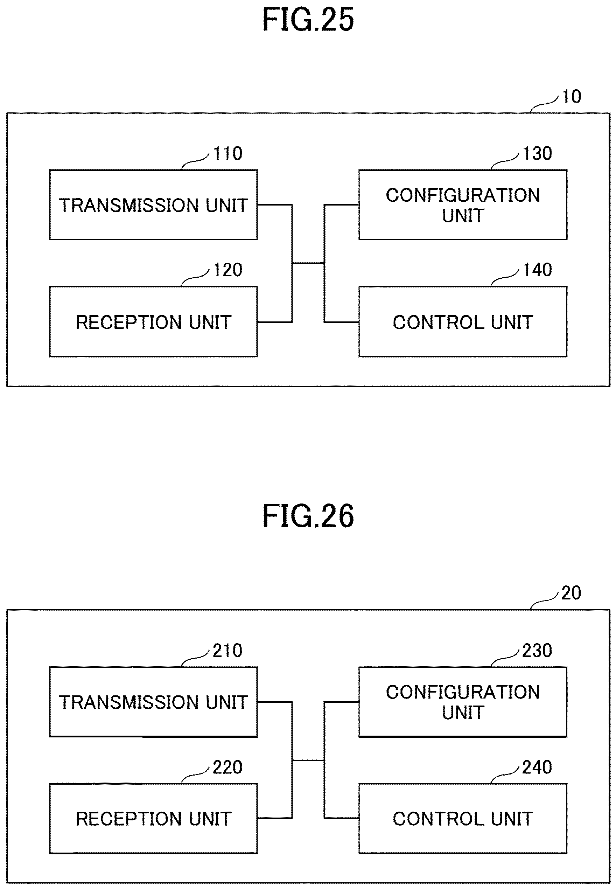

FIG. 25 is a diagram illustrating an example of a functional configuration of the base station 10. As illustrated in FIG. 25, the base station 10 includes a transmission unit 110, a reception unit 120, a configuration unit 130, and a control unit 140. The functional configuration illustrated in FIG. 25 is merely an example. Any functional division or names of the functional units may be used, as long as the operations according to the embodiment of the present invention can be executed.

The transmission unit 110 includes a function of generating signals to be transmitted to the terminal 20 side and transmitting the signals wirelessly. The reception unit 120 includes a function of receiving various signals transmitted from the terminal 20 and acquiring, for example, information of a higher layer from the received signals. The transmission unit 110 also has a function of transmitting NR-PSS, NR-SSS, NR-PBCH, DL/UL control signals, DL reference signals, and the like to the terminal 20.

The configuration unit 130 stores, in a storage device, preset configuration information and various types of configuration information to be transmitted to the terminal 20, and reads the information from the storage device as necessary. The content of the configuration information may include, for example, information related to the configuration of D2D communication.

The control unit 140 performs processing related to the configuration for enabling the terminal 20 to perform D2D communication, as described in the above embodiment. The control unit 140 also transmits scheduling information for D2D communication and DL communication to the terminal 20 via the transmission unit 110. Further, the control unit 140 receives information related to HARQ responses for D2D communication and DL communication from the terminal 20 via the reception unit 120. A functional component related to signal transmission within the control unit 140 may be included in the transmission unit 110, and a functional component related to signal reception within the control unit 140 may be included in the reception unit 120.

### <Terminal 20>

FIG. 26 illustrates an example of the functional configuration of the terminal 20. As illustrated in FIG. 26, the terminal 20 includes a transmission unit 210, a reception unit 220, a configuration unit 230, and a control unit 240. The functional configuration illustrated in FIG. 26 is only an example. As long as the operation according to the embodiment of the present invention can be executed, the functional classification and the name of the functional unit may be any.

The transmission unit 210 generates a transmission signal from the transmission data and transmits the transmission signal wirelessly. The reception unit 220 receives various signals wirelessly and acquires a higher layer signal from the received physical layer signal. The reception unit 220 also has a function of receiving NR-PSS, NR-SSS, NR-PBCH, DL/UL/SL control signals, reference signals, and the like transmitted from the base station 10. For example, the transmission unit 210 transmits PSCCH (Physical Sidelink Control Channel), PSSCH (Physical Sidelink Shared Channel), PSDCH (Physical Sidelink Discovery Channel), PSBCH (Physical Sidelink Broadcast Channel), and the like to the other terminal 20 as D2D communication, and the reception unit 220 receives PSCCH, PSSCH, PSDCH, PSBCH, and the like from the other terminal 20.

The configuration unit 230 stores, in a storage device, various types of configuration information received from the base station 10 or another terminal 20 by the reception unit 220, and reads the information from the storage device as necessary. The configuration unit 230 also stores preset configuration information. The content of the configuration information may include, for example, information related to the configuration of D2D communication.

The control unit 240 controls D2D communication for establishing RRC connection with another terminal 20, as described in the embodiment. The control unit 240 also performs processing related to power saving operation. The control unit 240 also performs processing related to HARQ of D2D communication and DL communication. The control unit 240 also transmits to the base station 10 information related to HARQ response of D2D communication and DL communication scheduled from the base station 10 to the other terminal 20. The control unit 240 may schedule D2D communication to the other terminal 20. The control unit 240 may autonomously select a resource to be used for D2D communication from the resource selection window based on the result of sidelink sensing, or may perform reevaluation or preemption. The control unit 240 also performs processing related to power saving in transmission and reception of D2D communication. The control unit 240 also performs processing related to cooperation between terminals in D2D communication. The control unit 240 also performs processing related to LBT in D2D communication. The function unit related to signal transmission in the control unit 240 may be included in the transmission unit 210, and the function unit related to signal reception in the control unit 240 may be included in the reception unit 220.

### (Hardware Configuration)

The block diagrams (FIGS. 25 and 26) used in the description of the above embodiment illustrate blocks of functional units. These functional blocks (components) are implemented by any combination of at least one of hardware and software. Furthermore, the implementation method of each functional block is not particularly limited. That is, each functional block may be implemented by using one device that is physically or logically coupled, or two or more devices that are physically or logically separated may be connected directly or indirectly (e.g., by wire, wireless, etc.) and implemented by using a plurality of these devices. The functional block may be implemented by combining software with one or more of the above devices.

Functions may include, but are not limited to, determining, deciding, judging, calculating, computing, processing, deriving, examining, searching, checking, receiving, transmitting, outputting, accessing, resolving, selecting, choosing, establishing, comparing, assuming, expecting, regarding, broadcasting, notifying, communicating, forwarding, configuring, reconfiguring, allocating, mapping, and assigning. For example, a functional block that performs transmission may be referred to as a transmission unit or a transmitter. As described above, the method of implementation is not particularly limited.

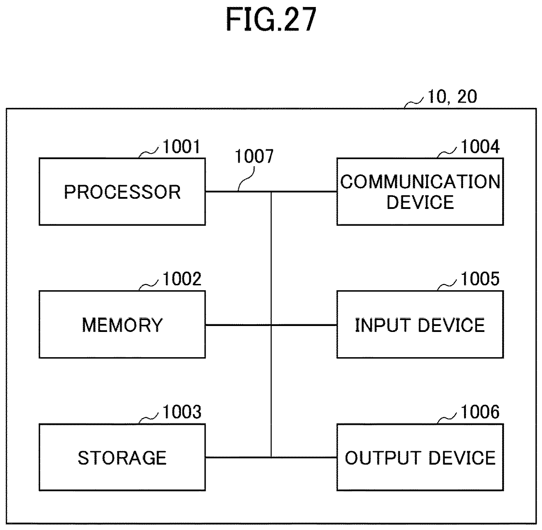

For example, the base station 10 and the terminal 20 in an embodiment of the present disclosure may function as computers that perform processing of the wireless communication method according to the present disclosure. FIG. 27 is a diagram illustrating an example of a hardware configuration of the base station 10 and the terminal 20 according to an embodiment of the present disclosure. Physically, the above-described base station 10 and terminal 20 may be configured as computer devices including, for example, a processor 1001, a memory 1002, a storage 1003, a communication device 1004, an input device 1005, an output device 1006, and a bus 1007.

In the following description, the term "device" may be interpreted as a circuit, unit, or other equivalent component. The hardware configuration of the base station 10 and the terminal 20 may include one or more of the devices illustrated in the figure, or may be configured without including some of the devices.

Each function of the base station 10 and the terminal 20 is implemented by causing a predetermined software (program) to be loaded onto hardware such as the processor 1001 and the memory 1002, whereby the processor 1001 performs arithmetic operations , controls communication via the communication device 1004, and controls at least one of reading from and writing to the memory 1002 and the storage 1003

The processor 1001 controls the entire computer by, for example, executing an operating system. The processor 1001 may be configured as a central processing unit (CPU) that includes an interface with peripheral devices, a control unit, an arithmetic unit, registers, and the like. For example, the above-mentioned control unit 140 and control unit 240 may be implemented by the processor 1001.

Further, the processor 1001 reads a program (program code), software module, data, or the like from at least one of the storage 1003 and the communication device 1004 into the memory 1002, and executes various processes in accordance therewith. As the program, a program that causes a computer to execute at least a part of the operations described in the above embodiment may be used. For example, the control unit 140 of the base station 10 shown in FIG. 25 may be implemented by a control program stored in the memory 1002 and executed by the processor 1001. Similarly, the control unit 240 of the terminal 20 shown in FIG. 26 may be implemented by a control program stored in the memory 1002 and executed by the processor 1001. Although the above various processes have been described as being executed by a single processor 1001, they may also be executed simultaneously or sequentially by two or more processors 1001. The processor 1001 may be implemented by one or more chips. The program may also be transmitted from a network via a telecommunication line.

The memory 1002 is a computer-readable recording medium and may include at least one of, for example, ROM (Read Only Memory), EPROM (Erasable Programmable ROM), EEPROM (Electrically Erasable Programmable ROM), and RAM (Random Access Memory). The memory 1002 may be called a register, cache, main memory (main memory), or the like. The memory 1002 may store a program (program code), a software module, or the like executable for implementing the communication method according to an embodiment of the present disclosure.

The storage 1003 is a computer-readable recording medium and may include at least one of, for example, an optical disk such as CD-ROM (Compact Disc ROM), a hard disk drive, a flexible disk, a magneto-optical disk (e.g., compact discs, digital versatile discs, Blu-ray^{®} discs), a smart card, a flash memory (e.g., cards, sticks, key drives), a floppy disk, a magnetic strip, or the like. The above-described storage medium may be, for example, a database, a server, or other suitable medium including at least one of the memory 1002 and the storage 1003.

The communication device 1004 is a hardware (transmission/reception device) for communicating between computers via at least one of a wired network and a wireless network, and may be referred to as, for example, a network device, a network controller, a network card, a communication module, or the like. The communication device 1004 may include a high-frequency switch, a duplexer, a filter, a frequency synthesizer, and the like to implement at least one of frequency division duplex (FDD) and time division duplex (TDD), for example. For example, a transmitting/receiving antenna, an amplifier unit, a transmitting/reception unit, a transmission line interface, and the like may be implemented by The communication device 1004 . The transmitting/reception unit may be physically or logically separated from the transmission unit and the reception unit.

The input device 1005 is an input device (e.g., keyboards, mice, microphones, switches, buttons, sensors, etc.) that receives input from the outside. The output device 1006 is an output device (e.g., displays, speakers, LED lamps, etc.) that performs output to the outside. The input device 1005 and the output device 1006 may be integrated (e.g., touch panel).

Each device such as the processor 1001 and the memory 1002 is connected by the bus 1007 for communicating information. The bus 1007 may be configured using a single bus or may be configured using different buses for each device.

Further, the base station 10 and the terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented using at least one of the above-described hardware.

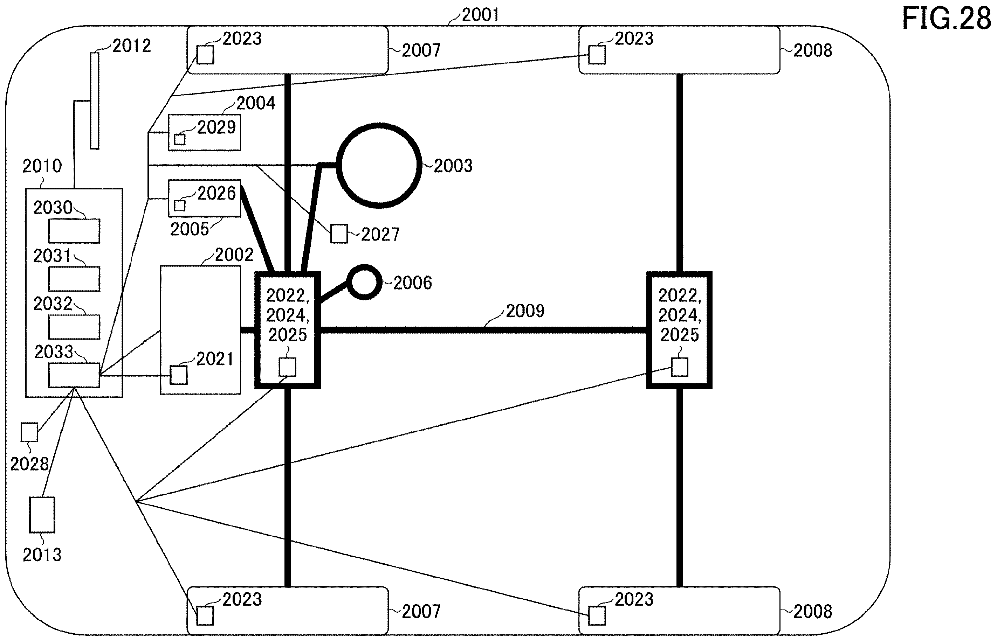

FIG. 28 illustrates an example of the configuration of the vehicle 2001. As illustrated in FIG. 28, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in this disclosure may be applied to a communication device mounted in the vehicle 2001, for example, to the communication module 2013.

The drive unit 2002 includes, for example, an engine, a motor, or a hybrid of an engine and a motor. The steering unit 2003 includes at least a steering wheel (also called a steering wheel) and is configured to steer at least one of the front wheel and the rear wheel based on the operation of the steering wheel operated by a user.

The electronic control unit 2010 comprises a microprocessor 2031, a memory (ROM, RAM) 2032, and a communication port (IO port) 2033. The electronic control unit 2010 receives signals from various sensors 2021 to 2029 provided in the vehicle 2001. The electronic control unit 2010 may be called an ECU (Electronic Control Unit).

The signals from the various sensors 2021 to 2029 include a current signal from a current sensor 2021 for sensing the current of the motor, a rotation speed signal of a front wheel or a rear wheel acquired by a rotation speed sensor 2022, an air pressure signal of a front wheel or a rear wheel acquired by an air pressure sensor 2023, a vehicle speed signal acquired by a vehicle speed sensor 2024, an acceleration signal acquired by an acceleration sensor 2025, an accelerator pedal depression amount signal acquired by an accelerator pedal sensor 2029, a brake pedal depression amount signal acquired by a brake pedal sensor 2026, a shift lever operation signal acquired by a shift lever sensor 2027, and a detection signal acquired by an object detection sensor 2028 for detecting an obstacle, a vehicle, a pedestrian, etc.

The information service unit 2012 is composed of various devices such as a car navigation system, an audio system, a speaker, a television, and a radio for providing (outputting) various kinds of information such as driving information, traffic information, and entertainment information, and one or more ECUs for controlling these devices. The information service unit 2012 provides various kinds of multimedia information and multimedia services to the occupants of the vehicle 2001 by using information acquired from an external device through the communication module 2013 or the like. The information service unit 2012 may include an input device (e.g., keyboard, mouse, microphone, switch, button, sensor, touch panel, etc.) for receiving input from the outside, or an output device (e.g., displays, speakers, LED lamps, touch panels, etc.) for outputting to the outside.

The driver support system unit 2030 is composed of various devices such as millimeter wave radar, LiDAR (Light Detection and Ranging), camera, positioning locator (e.g., GNSS, etc.), map information (e.g., high definition (HD) maps, autonomous vehicle (AV) maps, etc.), gyro system (e.g., Inertial Measurement Unit (IMU), Inertial Navigation System (INS), etc.), AI (Artificial Intelligence) chip, and AI processor, which provide functions to prevent accidents or reduce the driving load of the driver, and one or more ECUs that control these devices. The driver support system unit 2030 transmits and receives various kinds of information through the communication module 2013 to implement the driver support function or the automatic driving function.

The communication module 2013 can communicate with the microprocessor 2031 and components of the vehicle 2001 through the communication port. For example, the communication module 2013 transmits and receives data via the communication port 2033 between the drive unit 2002, the steering unit 2003, the accelerator pedal 2004, the brake pedal 2005, the shift lever 2006, the front wheel 2007, the rear wheel 2008, the axle 2009, the microprocessor 2031, the memory (ROM, RAM)2032 in the electronic control unit 2010, and the sensor 2021 to 29 provided in the vehicle 2001.

The communication module 2013 is a communication device controllable by the microprocessor 2031 of the electronic control unit 2010 and capable of communicating with external devices. For example, various kinds of information are transmitted and received via wireless communication with an external device. The communication module 2013 may be located inside or outside the electronic control unit 2010. The external device may be, for example, a base station or a mobile station.

The communication module 2013 may transmit to the external device via wireless communication at least one of signals from the various sensors 2021 to 2028 input to the electronic control unit 2010, information obtained based on the signals, and information obtained via the information service unit 2012 based on input from the outside (user). The electronic control unit 2010, the various sensors 2021 to 2028, the information service unit 2012, and the like may be called an input unit that receives input. For example, the PUSCH transmitted by the communication module 2013 may include information based on the input.

The communication module 2013 receives various information (Traffic information, signal information, inter-vehicle information, etc.) transmitted from the external device and displays it to the information service unit 2012 provided in the vehicle 2001. The information service unit 2012 may be called an output unit (e.g., based on the PDSCH received by the communication module 2013 (or data/information decoded from the PDSCH), information is output to a device such as a display or a speaker.) that outputs information. The communication module 2013 also stores various information received from the external device in the memory 2032 available by the microprocessor 2031. Based on the information stored in the memory 2032, the microprocessor 2031 may control the drive unit 2002, steering unit 2003, accelerator pedal 2004, brake pedal 2005, shift lever 2006, front wheel 2007, rear wheel 2008, axle 2009, sensors 2021 to 2029 and the like provided in the vehicle 2001.

### (Summary of Embodiments)

As described above, a terminal there is provided. The terminal includes:
a reception unit configured to perform Listen Before Talk (LBT) immediately before a first candidate symbol or a second candidate symbol for starting transmission in an unlicensed band;
a control unit configured to configure a parameter or a Sidelink Control Information (SCI) field used for determining a Transport Block Size (TBS), the parameter or the SCI field being different from a parameter or an SCI field that is used when a plurality of candidate symbols for starting transmission are not available; and
a transmission unit configured to determine the TBS based on the parameter or the SCI field when the LBT is successful, and to start transmission to another terminal from a candidate symbol immediately after the LBT.

With the above configuration, it is possible to optimize the handling of PSFCH overhead when TBS is determined based on the number of PSCCCH/PSSCH reference symbols that are configured or pre-configured. That is, it becomes possible to determine preferable parameters to be applied to transmission in direct communication between terminals in an unlicensed band.

The SCI field may indicate an overhead amount of a channel for transmitting feedback information, and a field size of the SCI field or the indicated overhead amount is different from a field size of the SCI field or the indicated overhead amount that is used in a case where a plurality of candidate symbols for starting transmission are not available. With the above configuration, in direct communication between terminals using one or more RB sets in an unlicensed band, when a plurality of candidate symbols for starting transmission are configured, optimal parameters for transmission can be applied to each candidate.

The control unit may determine the indicated overhead amount based on a configuration or a pre-configuration. With the above configuration, when the TBS is determined based on the number of PSCCCH/PSSCH reference symbols that are configured or pre-configured, the handling of PSFCH overhead can be optimized.

In a case of performing transmission in a plurality of Resource Block (RB) sets, the control unit may determine which one of the first candidate symbol or the second candidate symbol is used for starting transmission for the plurality of RB sets, based on which one of the first candidate symbol or the second candidate symbol can be used for starting transmission in each of the RB sets. With the above configuration, it is possible to flexibly determine from which of the candidate starting symbols to transmit when transmission is performed across a plurality of RB sets.

The control unit may determine execution or non-execution of transmission from each of the first candidate symbol or the second candidate symbol, based on whether transmission can be started from the first candidate symbol or the second candidate symbol in all of the plurality of RB sets. The configuration can perform transmission only when TB transmission can be reliably performed, and avoid transmission with a low reception success probability.

In addition, according to an embodiment of the present invention, a communication method performed by a terminal is provided. The communication method includes:
a step of performing Listen Before Talk (LBT) immediately before a first candidate symbol or a second candidate symbol for starting transmission in an unlicensed band;
a step of configuring a parameter or a Sidelink Control Information (SCI) field used for determining a Transport Block Size (TBS), the parameter or the SCI field being different from a parameter or an SCI field that is used in a case where a plurality of candidate symbols for starting transmission are not available; and
a step of, in a case where the LBT is successful, determining the TBS based on the parameter or the SCI field and starting transmission to another terminal from a candidate symbol immediately after the LBT.

With the above configuration, the handling of the PSFCH overhead can be optimized when the TBS is determined based on the number of PSCCH/PSSCH reference symbols configured or pre-configured. That is, it is possible to determine suitable parameters to be applied to the transmission in direct communication between terminals in the unlicensed band.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the devices may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., Downlink Control Information (DCI), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6G (6th generation mobile communication system), xG (xth generation mobile communication system) (xG (x is, for example, an integer or decimal)), FRA (Future Radio Access), NR (new Radio), NX (New radio access), FX (Future generation radio access), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system extended, modified, created or defined based thereon. A plurality of systems may be combined (for example, a combination of LTE or LTE-A and 5G, and the like) for application.

The order of processes, sequences, flowcharts, and so on that have been used to describe the aspects/embodiments in the present specification may be reordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another device.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Device", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting device," a "receiving device," a "radio communication device," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes a device which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above devices may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a minislot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). For a terminal 20, one or more BWPs may be configured in one carrier.

At least one of the configured BWPs may be activated, and the UE may assume that the terminal 20 will not transmit and receive signals/channels outside the activated BWP. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 1001: Processor
- 1002: Memory
- 1003: Storage
- 1004: Communication device
- 1005: Input device
- 1006: Output device
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Rotation speed sensor
- 2023: Air pressure sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driver support system unit
- 2031: Microprocessor
- 2032: Memory (ROM, RAM)
- 2033: Communication Port (IO Port)

## Claims

1. A terminal comprising:
a reception unit configured to perform Listen Before Talk (LBT) immediately before a first candidate symbol or a second candidate symbol for starting transmission in an unlicensed band;
a control unit configured to configure a parameter or a Sidelink Control Information (SCI) field used for determining a Transport Block Size (TBS), the parameter or the SCI field being different from a parameter or an SCI field that is used in a case where a plurality of candidate symbols for starting transmission are not available; and
a transmission unit configured to, in a case where the LBT is successful, determine the TBS based on the parameter or the SCI field and start transmission to another terminal from a candidate symbol immediately after the LBT.

2. The terminal according to claim 1,
wherein the SCI field indicates an overhead amount of a channel for transmitting feedback information, and
a field size of the SCI field or the indicated overhead amount is different from a field size of the SCI field or the indicated overhead amount that is used in a case where a plurality of candidate symbols for starting transmission are not available.

3. The terminal according to claim 2, wherein the control unit determines the indicated overhead amount based on a configuration or a pre-configuration.

4. The terminal according to claim 1, wherein in a case of performing transmission in a plurality of Resource Block (RB) sets, the control unit determines which one of the first candidate symbol or the second candidate symbol is used for starting transmission for the plurality of RB sets, based on which one of the first candidate symbol or the second candidate symbol can be used for starting transmission in each of the RB sets.

5. The terminal according to claim 4, wherein the control unit determines execution or non-execution of transmission from each of the first candidate symbol or the second candidate symbol, based on whether transmission can be started from the first candidate symbol or the second candidate symbol in all of the plurality of RB sets.

6. A communication method performed by a terminal, comprising:
a step of performing Listen Before Talk (LBT) immediately before a first candidate symbol or a second candidate symbol for starting transmission in an unlicensed band;
a step of configuring a parameter or a Sidelink Control Information (SCI) field used for determining a Transport Block Size (TBS), the parameter or the SCI field being different from a parameter or an SCI field that is used in a case where a plurality of candidate symbols for starting transmission are not available; and
a step of, in a case where the LBT is successful, determining the TBS based on the parameter or the SCI field and starting transmission to another terminal from a candidate symbol immediately after the LBT.
